# EUROPEAN PATENT SPECIFICATION

(11) **EP 3 613 660 B1**
(45) Date of publication and mention of the grant of the patent: **23.06.2021**
(21) Application number: 18806375.4
(22) Date of filing: 23.05.2018
(51) Int. Cl.: B62K 5/10, B62K 5/05, B62K 3/00, B62K 5/08

(54) **LEANING VEHICLE**
NEIGEFAHRZEUG
VÉHICULE À INCLINAISON

(30) Priority: 24.05.2017 JP 2017102462
(43) Date of publication of application: 26.02.2020
(73) Proprietor: Yamaha Hatsudoki Kabushiki Kaisha, Iwata-shi, Shizuoka 438-8501 (JP)
(72) Inventor: TERADA, Keisuke, Iwata-shi Shizuoka 438-8501 (JP); SANO, Takayuki, Iwata-shi Shizuoka 438-8501 (JP)
(74) Representative: Stöckeler, Ferdinand
(86) International application number: PCT/JP2018/019816
(87) International publication number: WO 2018/216727

(56) References cited:
- WO-A1-2014/053713
- CN-A- 106 043 533
- CN-U- 206 049 911
- JP-A- 2015 096 373
- JP-A- 2015 096 398
- JP-A- 2015 096 398
- JP-A- 2015 157 615
- JP-A- 2017 065 527
- JP-A- 2017 094 906
- US-B2- 7 530 419

## Description

### Technical Field

The present invention relates to a leaning vehicle equipped with a leanable body frame and two front wheels that are arranged side by side in a left-right direction of the body frame.

### Background Art

Patent Literature 1 discloses an example of the leaning vehicle of this type. The leaning vehicle includes a link mechanism. The link mechanism is configured so as to change positions of the two front wheels relative to the body frame to thereby cause the body frame to lean to the left or right of the leaning vehicle. The leaning vehicle includes a load transmission mechanism. The load transmission mechanism includes a left foot placement face and a right foot placement face on which a left foot and a right foot of a rider are placed, respectively. The rider transmits a load to a left portion of the link mechanism through the left foot placement face to thereby cause the leaning vehicle to lean to the left, and transmits a load to a right portion of the link mechanism through the right foot placement face to thereby cause the leaning vehicle to lean to the right.

WO2014/053713 A1 discloses which discloses all the features of the preamble of independent claim 1, an individual electric vehicle comprising a first central portion comprising at least one beam forming a casing housing electric batteries, a motorized rear wheel and a foldable steering column. A second additional portion comprises at least two arms each provided with a foot-rest, a steering bearing system of two front wheels and three swivelling connections, a first linking with the rear of the central portion, a second with a transverse bar (10) of the second portion (3), which is itself linked at its centre by a flexible member (11) to the front of the casing of the central portion, and a third linking to a fixed portion of the steering column via a connection rod of each of the arms.

JP 2015 096398 A discloses a vehicle comprising a right wheel provided at the right side of a main body and a left wheel provided at the left side of the main body. The vehicle also comprises a right lower arm for connecting the main body and the right wheel, a left lower arm for connecting the main body and the left wheel, and foot placement parts attached to the right lower arm and the left lower arm respectively. Feet of a driver are placed on the foot placement parts, where a position for the right lower arm to be attached to the main body is set at the left side of the main body and a position for the left lower arm to be attached to the main body is set at the right side of the main body.

CN 106 043 533 A discloses a scooter, two steering wheel mounting plates thereof being arranged on a fixing bracket. Each steering wheel on the inner side thereof is mounted to the corresponding steering wheel mounting plate. The two steering wheel mounting plates are respectively configured to be capable of rotating around an axis of the plate perpendicular to and intersected with a central line of a steering wheel rotation axis, wherein the axis of the plate is substantially perpendicular to the horizontal plane. A first end of each of connecting pull rods is connected to a force-receiving position deviating from the axis of the plate on the steering wheel mounting plate. A lower end of a swing rod is pivotally connected to the fixing bracket, such that the swing rod can swing left and right. A wobble plate is fixedly connected to the swing rod, and second ends of the two connecting pull rods are respectively connected to the wobble plate. By swinging the swing rod leftwards or rightwards, the wobble plate is driven to swing correspondingly, such that the two connecting pull rods respectively apply thrust and tension to the force-receiving position on the steering wheel mounting plates, so as to enable the two steering wheels to turn in the same direction.

### Prior Art Literature

[Patent Literature 1] US 7 530 419 B2

### Summary of Invention

An object of the invention is to improve the ride comfort of a leaning vehicle in which a body frame is caused to lean by operating a link mechanism through a load transmission mechanism.

The "ride comfort of a vehicle" used in this specification includes in meaning not only a light and quick controllability of and a sensation of integrity with the vehicle when it is running but also easiness of getting on and off the vehicle.

This object is achieved by a leaning vehicle according to claim 1. Further developments of the invention are defined in the dependent claims. According to the invention, the above object is achieved with a leaning vehicle comprising:
a body frame;
a left front wheel and a right front wheel that are arranged side by side in a left-right direction of the body frame;
an intermediate steering axis supporting portion defining an intermediate steering axis extending in an up-down direction of the body frame;
a steering member that is turnable about the intermediate steering axis relative to the body frame;
a link mechanism including:
   a left link portion including a left steering axis supporting portion defining a left steering axis extending in the up-down direction of the body frame on the left of the intermediate steering axis supporting portion in the left-right direction of the body frame; and
   a right link portion including a right steering axis supporting portion defining a right steering axis extending in the up-down direction of the body frame on the right of the intermediate steering axis supporting portion in the left-right direction of the body frame,
the link mechanism configured to change positions of the left front wheel and the right front wheel relative to the body frame to cause the body frame to lean leftward when the leaning vehicle is steered leftward and to cause the body frame to lean rightward of the leaning vehicle when the leaning vehicle is steered rightward,
a left suspending portion connected to the left steering axis supporting portion so as to be turnable about the left steering axis, and supporting the left front wheel;
a right suspending portion connected to the right steering axis supporting portion so as to be turnable about the right steering axis, and supporting the right front wheel;
a steering force transmission mechanism configured to cause the left suspending portion and the right suspending portion to turn about the left steering axis and the right steering axis respectively, in a same direction as a direction that the steering member is turned;
a load transmission mechanism including:
   a left foot placement portion having a left foot placement face on which a left foot of a standing rider is placed, wherein an angle of the left foot placement face relative to the body frame is unchanged; and
   a right foot placement portion having a right foot placement face on which a right foot of the standing rider is placed, wherein an angle of the right foot placement face relative to the body frame is unchanged;
the load transmission mechanism configured to transmit load through the left foot placement face to one of the left link portion and the right link portion, and to transmit load through the right foot placement face to the other one of the left link portion and the right link portion; and
a restriction mechanism configured to restrict displacement of the left foot placement portion and the right foot placement portion relative to the body frame.

According to the configuration described above, the leaning of the body frame can be controlled by individually controlling the load applied to the left foot placement face through the left foot of the rider and the load applied to the right foot placement face through the right foot of the rider.

When the body frame leans to the left of the leaning vehicle, the left link portion is displaced to a position lying above the right link portion in the up-down direction of the body frame. At this time, when a load is applied to the left link portion through the left foot placement face by the left foot of the rider, a force acts to displace the left link portion downward in the up-down direction of the body frame, whereby the leaning of the body frame to the left of the leaning vehicle can be restrained. On the contrary, when the body frame leans to the right of the leaning vehicle, the right link portion is displaced to a position lying above the left link portion in the up-down direction of the body frame. At this time, when a load is applied to the right link portion through the right foot placement face by the right foot of the rider, a force acts to displace the right link portion downward in the up-down direction of the body frame, whereby the leaning of the body frame to the right of the leaning vehicle can be restrained.

Since the leaning of the body frame can be controlled by applying the load to the link mechanism directly through the feet of the standing rider, the leaning vehicle can be provided with the light and quick operability while the leaning vehicle is running. Since the angle of the left foot placement face relative to the body frame and the angle of the right foot placement face relative to the body frame are unchanged, the faces on which the feet of the standing rider are placed follow the body frame which is leaning (in other words, the respective angles of the foot placement faces relative to a road surface change as the body frame leans). As a result, the integrity of the rider with the leaning vehicle can be enhanced while the leaning vehicle is running.

Further, the left foot placement portion and the right foot placement portion can be restricted from being displaced relative to the body frame by causing the restriction mechanism to operate, for example, in the upright state (the state where each foot placement face is parallel to the road surface) of the body frame. As a result, the leaning vehicle can be restricted from changing its posture in association with a change in load applied to the left foot placement face and the right foot placement face, whereby the rider can easily get on and off the leaning vehicle. Also in a condition that the body frame is caused to lean (each foot placement face are inclined relative to the road surface), the leaning vehicle can be restricted from changing its posture in association with a change in load applied to the left foot placement face and the right foot placement face whereby the rider can easily get on and off the leaning vehicle. Consequently, it is possible to improve the ride comfort of the leaning vehicle in which the body frame is caused to lean by operate the link mechanism through the load transmission mechanism.

The above leaning vehicle comprises a connecting portion connecting the left foot placement portion and the right foot placement portion. The connecting portion is turnable about an axis extending in a front-rear direction. A portion of the restriction mechanism is provided in the connecting portion.

With this configuration, the left foot placement portion and the right foot placement portion can be restricted from being displaced by making use of the configuration for enhancing the rigidities of the left foot placement portion and the right foot placement portion against loads applied thereto. Loads applied to the left foot placement portion and the right foot placement portion are partially absorbed by the connecting member. As a result, compared with a case where the loads are borne only by the left foot placement portion and the right foot placement portion, the configuration for restricting the displacement of the left foot placement portion and the right foot placement portion can be simplified.

In a further embodiment of the invention, the connecting portion may be disposed in a position that is closer to the left foot placement face and the right foot placement face than the link mechanism.

In this case, the displacement of the left foot placement portion and the right foot placement portion can be restricted in the position lying closer to the portion where loads are applied. Compared with a case where loads are restricted from a farther position, the configuration for restricting the displacement of the left foot placement portion and the right foot placement portion can be simplified.

According to the invention, the restriction mechanism includes a device configured to restrict a turning motion of the connecting portion by applying a friction force.

In this case, a restriction force against the displacement of the left foot placement portion and the right foot placement portion can be applied in any posture independently of a leaning angle of the body frame.

Alternatively, the restriction mechanism includes a device configured to restrict a turning motion of the connecting portion by engaging with the connecting portion.

In this case, although the leaning angle of the body frame to which a restriction force can be applied is limited, the restriction mechanism can be realized by the relatively simple and small mechanism.

In a further embodiment of the invention, the above leaning vehicle may be configured such that:
the left foot placement portion is provided in a portion in the left link portion where is displaceable relative to the body frame in accordance with a leaning motion of the body frame and is not displaceable relative to the body frame in accordance with displacement of the steering force transmission mechanism; and
the right foot placement portion is provided in a portion in the right link portion where is displaceable relative to the body frame in accordance with a leaning motion of the body frame and is not displaceable relative to the body frame in accordance with displacement of the steering force transmission mechanism.

With this configuration, when the leaning vehicle is steered to be turned, the left foot placement portion and the right foot placement portion are not displaced in a direction in which the steering member is turned. In other words, moving ranges of the left foot placement portion and the right foot placement portion are limited to the up-down direction and the leaning direction of the body frame. Consequently, the leaning vehicle can be restrained from being enlarged in size even in the case where the load transmission mechanism is provided.

In a further embodiment of the invention, where the above leaning vehicle is configured such that the left foot placement portion and the right foot placement portion are displaced in the up-down direction of the body frame in accordance with a leaning motion of the body frame, the leaning vehicle can be further restrained from being enlarged in size even in the case where the load transmission mechanism is provided.

In a further embodiment of the invention, the above leaning vehicle may be configured such that:
the link mechanism includes an upper cross member, a lower cross member, a left side member, and a right side member;
the upper cross member, the lower cross member, the left side member and the right side member are connected with one another such that the upper cross member and the lower cross member are held in postures that are parallel to each other, and such that the left side member and the right side member are held in postures that are parallel to each other;
the left link portion includes the left side member, a left portion of the upper cross member, and a left portion of the lower cross member; and
the right link portion includes the right side member, a right portion of the upper cross member, and a right portion of the lower cross member.

That is, the load transmission mechanism that is able to provide the above advantages can be applied to the so-called parallel four-joint link.

In a further embodiment of the invention, where the above leaning vehicle is configured such that the left foot placement portion is provided on the left side member, and the right foot placement portion is provided on the right side member, the movable ranges of the left foot placement portion and the right foot placement portion can be restrained from being expanded in the left-right direction of the body frame when the leaning vehicle leans. This is because the respective movable ranges of the left side member and the right side member in the left-right direction of the body frame when the leaning vehicle leans are smaller than the respective movable ranges thereof in the up-down direction of the body frame. The effect of this configuration described above becomes remarkable when the positions of the left foot placement face and the right foot placement face are spaced away from a turning center of the lower cross member.

In a further embodiment of the invention, the above leaning vehicle may be configured such that the left foot placement portion, the right foot placement portion, and the restriction mechanism are disposed below the link mechanism in the up-down direction of the body frame.

With this configuration, the restriction mechanism is provided at the portion lying closer to the left foot placement face and the right foot placement face to which loads are applied from the feet of the rider. Accordingly, the displacement restricting effect of the left foot placement portion and the right foot placement portion can be enhanced while simplifying the configuration of the restriction mechanism. In addition, the center of gravity of the leaning vehicle is lowered, thereby improving the ride comfort of the leaning vehicle.

In a further embodiment of the invention, the above leaning vehicle may be configured such that:
the steering member includes a grip member adapted to be gripped by the rider; and
the grip member is disposed ahead of a front end of the left foot placement face and a front end of the right foot placement face in a front-rear direction of the body frame.

With this configuration, a space where the rider can stretch his or her arms is easily ensured directly ahead of the body of the rider. In addition, a position of the center of gravity of the leaning vehicle in the front-rear direction of the body frame can be easily adjusted. As a result, it is possible to further improve the ride comfort of the leaning vehicle in which the body frame is caused to lean by operating the link mechanism through the load transmission mechanism.

### Brief Description of Drawings

Fig. 1 is a left side view showing a leaning vehicle according to one embodiment.
Fig. 2 is a front view showing the leaning vehicle of Fig. 1.
Fig. 3 is a plan view showing the leaning vehicle of Fig. 1.
Fig. 4 is a rear view showing the leaning vehicle of Fig. 1.
Fig. 5 is a front view showing the leaning vehicle of Fig. 1 when leaning is performed.
Fig. 6 is a rear view showing the leaning vehicle of Fig. 1 when leaning is performed.
Fig. 7 is a rear view showing a portion of a leaning vehicle according to a first modified example.
Fig. 8 is a perspective view showing a portion of a leaning vehicle according to a second modified example.

### Detailed Description of Embodiments

Referring to the accompanying drawings, an exemplary embodiment will be described in detail below.

In the accompanying drawings, an arrow F denotes a front or forward direction of a leaning vehicle. An arrow B denotes a back/rear or backward/rearward direction of the leaning vehicle. An arrow U denotes an up or upward direction of the leaning vehicle. An arrow D denotes a down or downward direction of the leaning vehicle. An arrow R denotes a right or rightward direction of the leaning vehicle. An arrow L denotes a left or leftward direction of the leaning vehicle.

A leaning vehicle turns with a body frame being caused to lean to the left or right of the leaning vehicle from a vertical direction. Then, in addition to the directions based on the leaning vehicle, directions based on the body frame will be defined. In the accompanying drawings, an arrow FF denotes a front or forward direction of the body frame. An arrow FB denotes a back/rear or backward/rearward of the body frame. An arrow FU denotes an up or upward direction of the body frame. An arrow FD denotes a down or downward direction of the body frame. An arrow FR denotes a right or rightward direction of the body frame. An arrow FL denotes a left or leftward direction of the body frame.

In this description, a "front-rear direction of the body frame," a "left-right direction of the body frame" and an "up-down direction of the body frame" mean a front-rear direction, a left-right direction and an up-down direction based on the body frame when viewed from a rider who rides the leaning vehicle. "A side of or sideways of the body frame" means directly on the right or left in the left-right direction of the body frame.

In this description, an expression "extending in the front-rear direction of the leaning vehicle body frame" includes a fact that it extends while being inclined in relation to the front-rear direction of the leaning vehicle body frame and means that it extends in a direction closer to the front-rear direction of the leaning vehicle body frame than the left-right direction and up-down direction of the leaning vehicle body frame.

In this description, an expression "extending in the left-right direction of the leaning vehicle body frame" includes a fact that it extends while being inclined in relation to the left-right direction of the leaning vehicle body frame and means that it extends in a direction closer to the left-right direction of the leaning vehicle body frame than the front-rear direction and up-down direction of the leaning vehicle body frame.

In this description, an expression "extending in the up-down direction of the leaning vehicle body frame" includes a fact that it extends while being inclined in relation to the up-down direction of the leaning vehicle body frame and means that it extends in a direction closer to the up-down direction of the leaning vehicle body frame than the left-right direction and front-rear direction of the leaning vehicle body frame.

In this description, an expression reading the "leaning vehicle is standing upright or in an upright state" or the "body frame is standing upright or in the upright state" means a state in which the leaning vehicle is not steered at all and the up-down direction of the body frame coincides with the vertical direction. In this state, the directions based on the leaning vehicle coincide with the directions based on the body frame. When the leaning vehicle is turning with the body frame caused to lean to the left or right from the vertical direction, the left-right direction of the leaning vehicle does not coincide with the left-right direction of the body frame. Similarly, the up-down direction of the leaning vehicle does not coincide with the up-down direction of the body frame. However, the front-rear direction of the leaning vehicle coincides with the front-rear direction of the body frame.

In this description, an expression reading "directly on the left of a member A in the left-right direction of the body frame" denotes a space through which the member A passes when the member A is translated to the left in the left-right direction of the body frame. An expression reading "directly on the right of the member A" is also defined in the same way.

In this description, an expression reading "on the left of the member A in the left-right direction of the body frame" includes not only the space through which the member A passes when the member A is translated to the left in the left-right direction of the body frame but also a space which expands from the space in directions which are at right angles to the left-right direction of the body frame. An expression reading "on the right of the member A" is also defined in the same way.

In this description, an expression reading "directly above the member A in the up-down direction of the body frame" denotes a space through which the member A passes when the member A is translated rightward in the up-down direction of the body frame. An expression reading "directly below the member A" is also defined in the same way.

In this description, an expression reading "above the member A in the up-down direction of the body frame" includes not only the space through which the member A passes when the member A is translated rightward in the up-down direction of the body frame but also a space which expands from the space in directions which are at right angles to the up-down direction of the body frame. An expression reading "below the member A" is also defined in the same way.

In this description, an expression reading "directly ahead of the member A in the front-rear direction of the body frame" denotes a space through which the member A passes when the member A is translated to the front in the front-rear direction of the body frame. An expression reading "directly behind the member A" is also defined in the same way.

In this description, an expression reading "ahead of the member A in the front-rear direction of the body frame" includes not only the space through which the member A passes when the member A is translated to the front in the front-rear direction of the body frame but also a space which expands from the space in directions which are at right angles to the front-rear direction of the body frame. An expression reading "behind the member A" is also defined in the same way.

In this description, "rotation, rotating or rotated" means that a member is displaced at an angle of 360 degrees or more about an axis thereof. In this description, "turn, turning or turned" means that a member is displaced at an angle less than 360 degrees about an axis thereof.

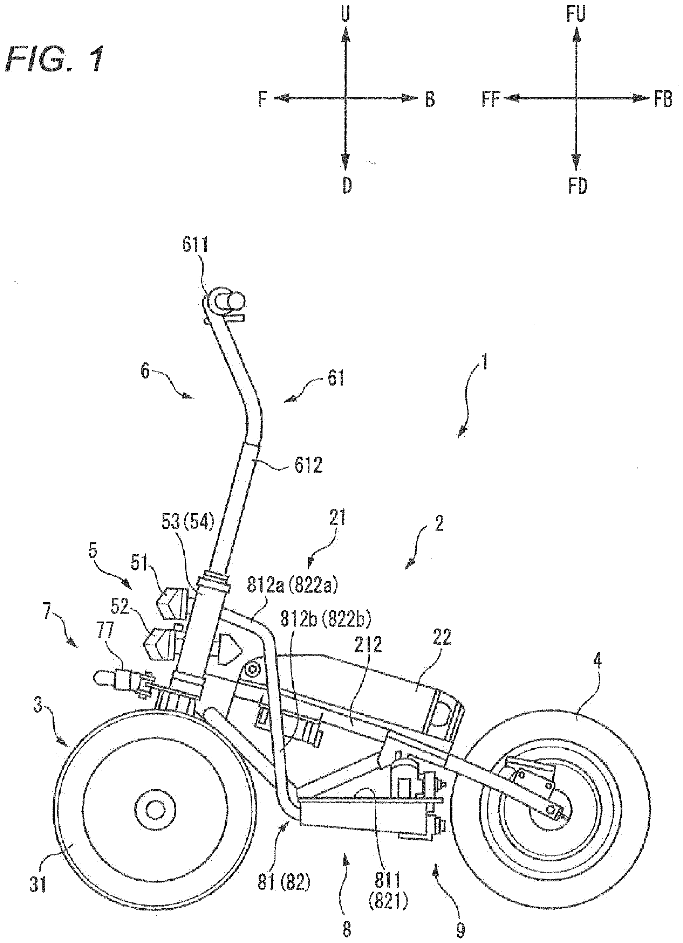

Referring to Figs. 1 to 6, a leaning vehicle 1 according to an embodiment will be described. The leaning vehicle 1 is a vehicle which includes a leanable body frame and two front wheels which are arranged side by side in a left-right direction of the body frame.

As shown in Fig. 1, the leaning vehicle 1 comprises a vehicle main body 2, two front wheels 3, a rear wheel 4, a link mechanism 5 and a steering mechanism 6.

The vehicle main body portion 2 comprises a body frame 21 and a power unit 22. In Fig. 1, the body frame 21 is in an upright state. The following description to be made while referring to Fig. 1 is based on the premise that the body frame 21 is in the upright state. Fig. 1 is a left side view in which the whole of the leaning vehicle 1 is viewed from the left in the left-right direction of the body frame 21.

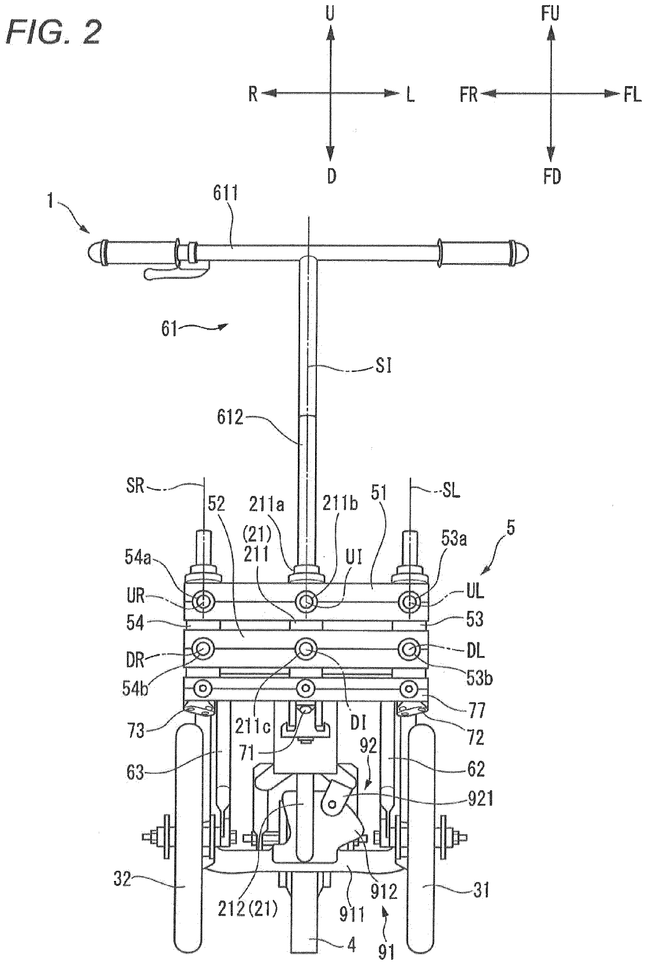

Fig. 2 is a front view of a front portion of the leaning vehicle 1 as viewed from the front of the leaning vehicle 1 in a front-rear direction of the body frame 21. In Fig. 2, the body frame 21 is in the upright state. The following description to be made while referring to Fig. 2 is based on the premise that the body frame 21 is in the upright state.

The body frame 21 comprises a head pipe 211 and a main frame 212. The body frame 21 supports the power unit 22.

The head pipe 211 is disposed at a front portion of the leaning vehicle 1. When viewing the leaning vehicle 1 from the left in the left-right direction of the body frame 21, an upper portion of the head pipe 211 is disposed behind a lower portion of the head pipe 211 in the front-rear direction of the body frame 21.

The main frame 212 is connected to the head pipe 211. The main frame 212 is disposed behind the head pipe 211 in the front-rear direction of the body frame 21. A rear end portion of the main frame 212 supports the rear wheel 4.

The two front wheels 3 are disposed below the head pipe 211 in an up-down direction of the body frame 21. The rear wheel 4 is disposed behind the two front wheels 3 in the front-rear direction of the body frame 21.

The power unit 22 generates power for driving the leaning vehicle 1. When viewing the leaning vehicle 1 in the left-right direction of the body frame 21, the power unit 22 is disposed ahead of an axle shaft 41 of the rear wheel 4 in the front-rear direction of the body frame 21. The power unit 22 is disposed so as not to be displaced relative to the body frame 21. The power unit 22 is disposed so as not to be movable relative to the main frame 212. The power unit 22 includes an engine. Driving force generated by the engine is transmitted to the rear wheel 4 through the transmission mechanism.

The two front wheels 3 include a left front wheel 31 and a right front wheel 32. The left front wheel 31 is disposed on the left of the head pipe 211 which is a part of the body frame 21 in the left-right direction of the body frame 21. The right front wheel 32 is disposed on the right of the head pipe 211 in the left-right direction of the body frame 21. The left front wheel 31 and the right front wheel 32 are arranged side by side in the left-right direction of the body frame 21.

The head pipe 211 includes an intermediate steering axis supporting portion 211a. The intermediate steering axis supporting portion 211a defines an intermediate steering axis SI. The intermediate steering axis SI extends in an up-down direction of the body frame 21.

The steering mechanism 6 includes a steering member 61. The steering member 61 includes a handlebar 611 and a steering shaft 612. The steering shaft 612 extends downward from an intermediate portion of the handlebar 611 in relation to the left-right direction of the body frame 21. The steering shaft 612 is supported on the head pipe 211 via the intermediate steering axis supporting portion 211a. The steering shaft 612 can turn about the intermediate steering axis SI relative to the head pipe 211. That is, the steering member 61 is provided so as to be turnable about the intermediate steering axis SI relative to the body frame 21.

The link mechanism 5 is a mechanism of a so-called four-joint parallel link system (also, referred to as a parallelogram link).

The link mechanism 5 is disposed above the left front wheel 31 and the right front wheel 32 in the up-down direction of the body frame 21. The link mechanism 5 includes an upper cross member 51, a lower cross member 52, a left side member 53 and a right side member 54. The upper cross member 51 and the lower cross member 52 extend in the left-right direction of the body frame 21. The left side member 53 and the right side member 54 extend in the up-down direction of the body frame 21.

The link mechanism 5 is not interlocked with the turning of the steering shaft 612 about the intermediate steering axis SI. That is, the link mechanism 5 does not turn about the intermediate steering axis SI relative to the body frame 21.

The head pipe 211 includes an upper intermediate axis supporting portion 211b. The upper intermediate axis supporting portion 211b defines an upper intermediate leaning axis UI. The upper intermediate leaning axis UI extends in the front-rear direction of the body frame 21. An intermediate portion of the upper cross member 51 is supported on the head pipe 211 via the upper intermediate axis supporting portion 211b. The upper cross member 51 can turn about the upper intermediate leaning axis UI relative to the head pipe 211.

The head pipe 211 includes a lower intermediate axis supporting portion 211c. The lower intermediate axis supporting portion 211c defines a lower intermediate leaning axis DI. The lower intermediate leaning axis DI extends in the front-rear direction of the body frame 21. An intermediate portion of the lower cross member 52 is supported on the head pipe 211 via the lower intermediate axis supporting portion 211c. The lower cross member 52 can turn about the lower intermediate leaning axis DI relative to the head pipe 211.

The left side member 53 includes an upper left axis supporting portion 53a. The upper left axis supporting portion 53a defines an upper left leaning axis UL. The upper left leaning axis UL extends in the front-rear direction of the body frame 21. A left end portion of the upper cross member 51 is connected to the left side member 53 via the upper left axis supporting portion 53a. The upper cross member 51 can turn about the upper left leaning axis UL relative to the left side member 53.

The right side member 54 includes an upper right axis supporting portion 54a. The upper right axis supporting portion 54a defines an upper right leaning axis UR. The upper right leaning axis UL extends in the front-rear direction of the body frame 21. A right end portion of the upper cross member 51 is connected to the right side member 54 via the upper right axis supporting portion 54a. The upper cross member 51 can turn about the upper right leaning axis UR relative to the right side member 54.

The left side member 53 includes a lower left axis supporting portion 53b. The lower left axis supporting portion 53b defines a lower left leaning axis DL. The lower left leaning axis DL extends in the front-rear direction of the body frame 21. A left end portion of the lower cross member 52 is connected to the left side member 53 via the lower left axis supporting portion 53b. The lower cross member 52 can turn about the lower left leaning axis DL relative to the left side member 53.

The right side member 54 includes a lower right axis supporting portion 54b. The lower right axis supporting portion 54b defines a lower right leaning axis DR. The lower right leaning axis DR extends in the front-rear direction of the body frame 21. A right end portion of the lower cross member 52 is connected to the right side member 54 via the lower right axis supporting portion 54b. The lower cross member 52 can turn about the lower right leaning axis DR relative to the right side member 54.

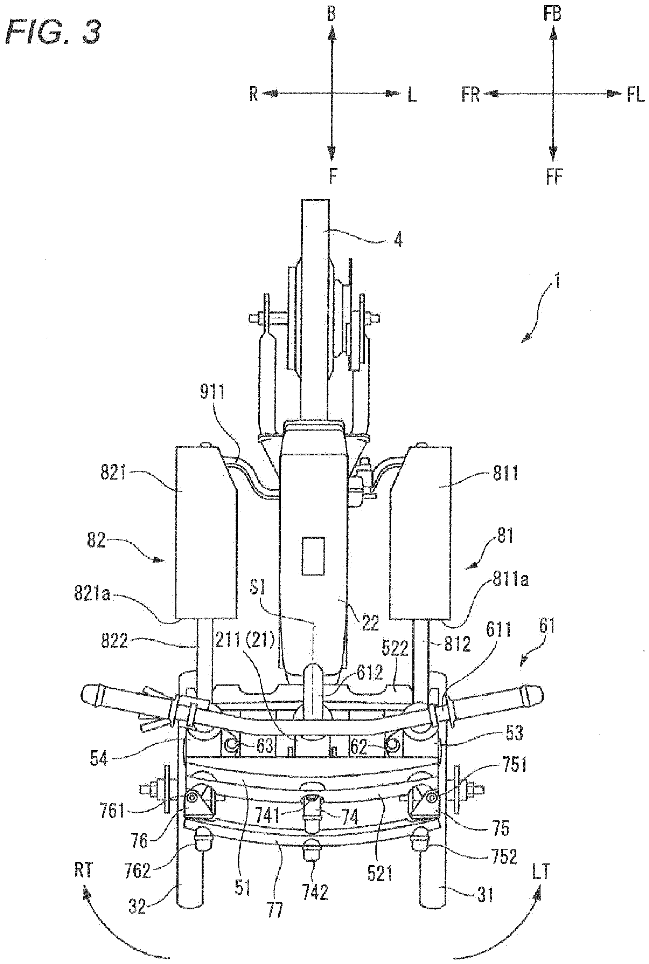

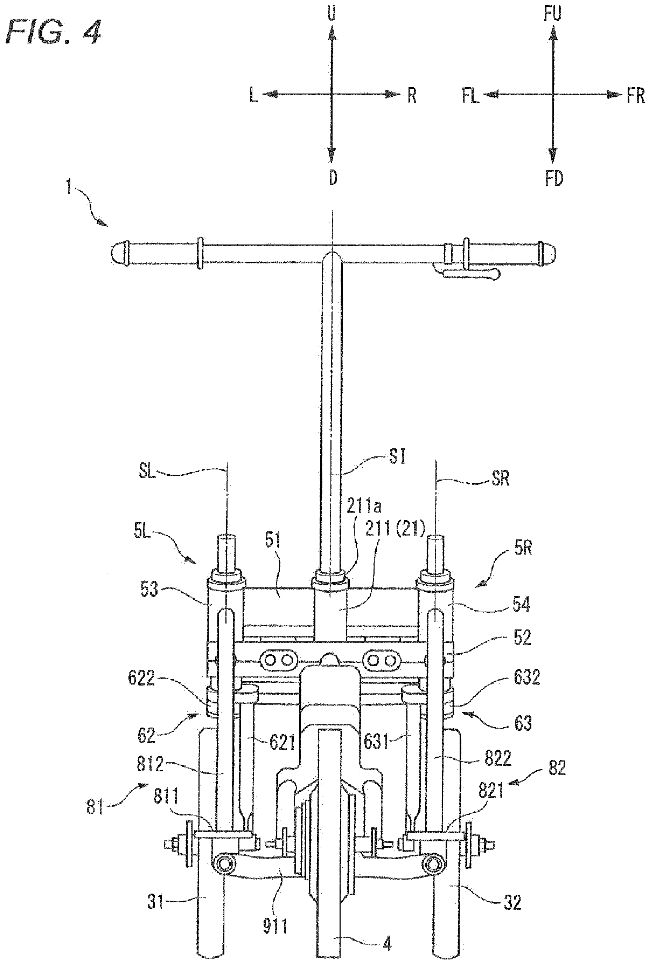

Fig. 3 is a plan view of the leaning vehicle 1 as viewed from above in the up-down direction of the body frame 21. In Fig. 3, the body frame 21 is in the upright state. The following description to be made while referring to Fig. 3 is based on the premise that the body frame 21 is in the upright state. Fig. 4 is a rear view of the leaning vehicle 1 as viewed from rear in the front-rear direction of the body frame 21. In Fig. 4, the body frame 21 is in the upright state. The following description to be made while referring to Fig. 4 is based on the premise that the body frame 21 is in the upright state.

The upper cross member 51 is disposed ahead of the head pipe 211 in the front-rear direction of the body frame 21.

The lower cross member 52 is disposed below the upper cross member 51 in the up-down direction of the body frame 21. The lower cross member 52 includes a front element 521 and a rear element 522. The front element 521 is disposed ahead of the head pipe 211, the left side member 53 and the right side member 54 in the front-rear diction of the body frame 21. The rear element 522 is disposed behind the head pipe 211, the left side member 53 and the right side member 54 in the front-rear diction of the body frame 21.

The left side member 53 is disposed directly on the left of the head pipe 211 in the left-right direction of the body frame 21. The left side member 53 is disposed above the left front wheel 31 in the up-down direction of the body frame 21. An upper portion of the left side member 53 is disposed behind a lower portion thereof in the front-rear direction of the body frame 21.

The right side member 54 is disposed directly on the right of the head pipe 211 in the left-right direction of the body frame 21. The right side member 54 is disposed above the right front wheel 32 in the up-down of the body frame 21. An upper portion of the right side member 54 is disposed behind a lower portion thereof in the front-rear direction of the body frame 21.

The upper cross member 51, the lower cross member 52, the left side member 53 and the right side member 54 are supported on the head pipe 211 so that the upper cross member 51 and the lower cross member 52 are kept in a posture in which the upper cross member 51 and the lower cross member 52 are parallel to each other and that the left side member 53 and the right side member 54 are kept in a posture in which the left side member 53 and the right side member 54 are parallel to each other.

As shown in Figs. 2 and 4, the steering mechanism 6 includes a left suspending portion 62 and a right suspending portion 63. The left suspending portion 62 includes a left lower portion 621 and a left upper portion 622. The right suspending portion 63 includes a right lower portion 631 and a right upper portion 632.

The left lower portion 621 supports the left front wheel 31 at a lower end portion thereof. An upper end portion of the left lower portion 621 is fixed to the left upper portion 622.

The right lower portion 631 supports the right front wheel 32 at a lower end portion thereof. An upper end portion of the right lower portion 631 is fixed to the right upper portion 632.

The left upper portion 622 includes a left turnable member (not shown) at an upper portion thereof. The left turnable member is disposed in an interior of the left side member 53 and extends in the same direction as a direction in which the left side member 53 extends. The left side member 53 includes a left steering axis supporting portion (not shown). The left steering axis supporting portion defines a left steering axis SL. The left steering axis SL extends in the up-down direction of the body frame 21. The left turnable member is supported by the left side member 53 via the left steering axis supporting portion. The left turnable member can turn about the left steering axis SL relative to the left side member 53. That is, the left upper portion 622 is connected to the left side member 53 via the left turnable member and can turn about the left steering axis SL.

The right upper portion 632 includes a right turnable member (not shown) at an upper portion thereof. The right turnable member is disposed in an interior of the right side member 54 and extends in the same direction as a direction in which the right side member 54 extends. The right side member 54 includes a right steering axis supporting portion (not shown). The right steering axis supporting portion defines a right steering axis SR. The right steering axis SR extends in the up-down direction of the body frame 21. The right turnable member is supported by the right side member 54 via the right steering axis supporting portion. The right turnable member can turn about the right steering axis SR relative to the right side member 54. That is, the right upper portion 632 is connected to the right side member 54 via the right turnable member and can turn about the right steering axis SR.

The link mechanism 5 includes a left link portion 5L and a right link portion 5R.

The left link portion 5L includes a left portion of the upper cross member 51, a left portion of the lower cross member 52, and the left side member 53. The left portion of the upper cross member 51 is a portion that is positioned on the left of the intermediate steering axis supporting portion 211a in the left-right direction of the body frame 21. The left portion of the lower cross member 52 is a portion that is positioned on the left of the intermediate axis supporting portion 211a in the left-right direction of the body frame 21.

The right link portion 5R includes a right portion of the upper cross member 51, a right portion of the lower cross member 52, and the right side member 54. The right portion of the upper cross member 51 is a portion that is positioned on the right of the intermediate steering axis supporting portion 211a in the left-right direction of the body frame 21. The right portion of the lower cross member 52 is a portion that is positioned on the right of the intermediate steering axis supporting portion 211a in the left-right direction of the body frame 21.

As shown in Figs. 1 to 3, the leaning vehicle 1 includes a steering force transmission mechanism 7. The steering force transmission mechanism 7 includes an intermediate transmission plate 71, a left transmission plate 72, a right transmission plate 73, an intermediate joint 74, a left joint 75, a right joint 76, and a tie rod 77.

The intermediate transmission plate 71 is connected to a lower portion of the steering shaft 612. The intermediate transmission plate 71 cannot turn relative to the steering shaft 612. Consequently, the intermediate transmission plate 71 can turn together with the steering shaft 612 about the intermediate steering axis SI relative to the head pipe 211.

The left transmission plate 72 is disposed directly on the left of the intermediate transmission plate 71 in the left-right direction of the body frame 21. The left transmission plate 72 is connected to the left suspending portion 62. The left transmission plate 72 cannot turn relative to the left suspending portion 62. Consequently, the left transmission plate 72 can turn about the left steering axis SL relative to the left side member 53.

The right transmission plate 73 is disposed directly on the right of the intermediate transmission plate 71 in the left-right direction of the body frame 21. The right transmission plate 73 is connected to the right suspending portion 63. The right transmission plate 73 cannot turn relative to the right suspending portion 63. Consequently, the right transmission plate 73 can turn about the right steering axis SR relative to the right side member 54.

The intermediate joint 74 includes an intermediate joint steering axis supporting portion 741. The intermediate joint steering axis supporting portion 741 defines an intermediate joint steering axis that extends in the up-down direction of the body frame 21. The intermediate joint 74 is connected to a front portion of the intermediate transmission plate 71 via the intermediate joint steering axis supporting portion 741. As a result, the intermediate joint 74 can turn about the intermediate joint steering axis relative to the intermediate transmission plate 71.

The left joint 75 is disposed on the left of the intermediate joint 74 in the left-right direction of the body frame 21. The left joint 75 includes a left joint steering axis supporting portion 751. The left joint steering axis supporting portion 751 defines a left joint steering axis that extends in the up-down direction of the body frame 21. The left joint 75 is connected to a front portion of the left transmission plate 72 via the left joint steering axis supporting portion 751. As a result, the left joint 75 can turn about the left joint steering axis relative to the left transmission plate 72.

The right joint 76 is disposed on the right of the intermediate joint 74 in the left-right direction of the body frame 21. The right joint 76 includes a right joint steering axis supporting portion 761. The right joint steering axis supporting portion 761 defines a right joint steering axis that extends in the up-down direction of the body frame 21. The right joint 76 is connected to a front portion of the right transmission plate 73 via the right joint steering axis supporting portion 761. As a result, the right joint 76 can turn about the right joint steering axis relative to the right transmission plate 73.

The intermediate joint 74 includes an intermediate joint leaning axis supporting portion 742. The intermediate joint leaning axis supporting portion 742 defines an intermediate joint leaning axis that extends in the front-rear direction of the body frame 21. An intermediate portion of the tie rod 77 is connected with the intermediate joint leaning axis supporting portion 742 so as to be turnable about the intermediate joint leaning axis.

The left joint 75 includes a left joint leaning axis supporting portion 752. The left joint leaning axis supporting portion 752 defines a left joint leaning axis that extends in the front-rear direction of the body frame 21. A left portion of the tie rod 77 is connected to the left joint leaning axis supporting portion 752 so as to be turnable about the left joint leaning axis.

The right joint 76 includes a right joint leaning axis supporting portion 762. The right joint leaning axis supporting portion 762 defines a right joint leaning axis that extends in the front-rear direction of the body frame 21. A right portion of the tie rod 77 is connected to the right joint leaning axis supporting portion 762 so as to be turnable about the right joint leaning axis.

The left transmission plate 72 is connected to the intermediate transmission plate 71 via the left joint 75, the tie rod 77 and the intermediate joint 74. The right transmission plate 73 is connected to the intermediate transmission plate 71 via the right joint 76, the tie rod 77 and the intermediate joint 74. The left transmission plate 72 and the right transmission plate 73 are connected to each other via the left joint 75, the tie rod 77 and the right joint 76. In other words, the tie rod 77 connects the intermediate transmission plate 71 with the left transmission plate 72 and the right transmission plate 73.

When the rider operates the handlebar 611, the steering shaft 612 turns about the intermediate leaning axis SI relative to the head pipe 211. In the case where the front wheels are turned to the left, the steering shaft 612 turns in a direction indicated by an arrow LT. In association with the turning of the steering shaft 612, the intermediate transmission plate 71 turns in the direction indicated by the arrow LT about the intermediate steering axis SI relative to the head pipe 211.

As the intermediate transmission plate 71 turns in the direction indicated by the arrow LT, the intermediate joint 74 turns relative to the intermediate transmission plate 71 in a direction indicated by an arrow RT. As a result, the tie rod 77 moves to the left in the left-right direction of the body frame 21 and to the rear in the front-rear direction of the body frame 21 while maintaining its posture.

As the tie rod 77 moves as described above, the left joint 75 and the right joint 76 turn in the direction indicated by the arrow RT relative to the left transmission plate 72 and the right transmission plate 73, respectively. As a result, the left transmission plate 72 and the right transmission plate 73 turn in the direction indicated by the arrow LT with the tie rod 77 maintaining its posture.

When the left transmission plate 72 turns in the direction indicated by the arrow LT, the left suspending portion 62, which cannot turn relative to the left transmission plate 72, turns in the direction indicated by the arrow LT about the left steering axis SL relative to the left side member 53.

When the right transmission plate 73 turns in the direction indicated by the arrow LT, the right suspending portion 63, which cannot turn relative to the right transmission plate 73, turns in the direction indicated by the arrow LT about the right steering axis SR relative to the right side member 54.

When the left suspending portion 62 turns in the direction indicated by the arrow LT, the left front wheel 31, which is supported on the left suspending portion 62, turns in the direction indicated by the arrow LT about the left steering axis SL relative to the left side member 53.

When the right suspending portion 63 turns in the direction indicated by the arrow LT, the right front wheel 32, which is supported on the right suspending portion 63, turns in the direction indicated by the arrow RT about the right steering axis SR relative to the right side member 54.

When the rider operates the handlebar 611 so as to turn the left and right front wheels to the right, the elements described above turn in an opposite direction to the direction in which they turn when the left and right front wheels are turned to the left. Since the elements only move the other way around in relation to the left-right direction, the detailed description thereof will be omitted here.

Thus, as has been described heretofore, the steering force transmission mechanism 7 turns the left suspending portion 62 about the left steering axis SL in the direction in which the steering member 61 turns in association with turning of the steering member 61. Similarly, the steering force transmission mechanism 7 turns the right suspending portion 63 about the right steering axis SR in the direction in which the right suspending portion 63 turns. As a result, the steering force transmission mechanism 7 transmits the steering force to the left front wheel 31 and the right front wheel 32 in accordance with the operation of the steering member 61 by the rider. The left front wheel 31 and the right front wheel 32 turn about the left steering axis SL and the right leaning axis SR, respectively, in accordance with the direction in which the steering member 61 is operated by the rider.

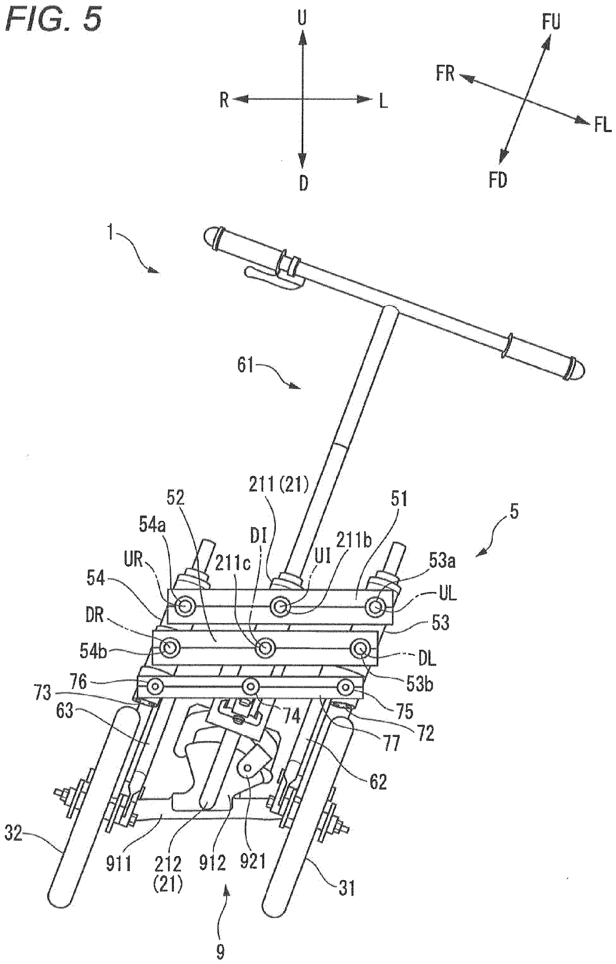

Next, referring to Figs. 2 and 5, a leaning operation of the leaning vehicle 1 will be described. Fig. 5 is a front view of the front portion of the leaning vehicle 1 as viewed from front in the front-rear direction of the body frame 21 under a condition that the body frame 21 caused to lean to the left. In Fig. 5, the illustration of the rear wheel 4 is omitted.

As shown in Fig. 2, when the leaning vehicle 1 is viewed from the front of the body frame 21 which is standing upright, the link mechanism 5 exhibits the shape of a rectangle. As shown in Fig. 5, when looking at the leaning vehicle 1 from the front of the body frame 21 which is leaning, the link mechanism 5 exhibits the shape of a parallelogram. The operation of the link mechanism 5 is interlocked with the leaning of the body frame 21 in the left-right direction thereof. The "operation of the link mechanism 5" means that the shape of the link mechanism 5 changes. This change in shape of the link mechanism 5 is caused when the upper cross member 51 and the lower cross member 52 turn about the upper intermediate leaning axis UI and the lower intermediate leaning axis DI, respectively, relative to the head pipe 211, and the upper cross member 51, the lower cross member 52, the left side member 53, and the right side member 54 turn relatively about the upper left leaning axis UL, the upper right leaning axis UR, the lower left leaning axis DL, and the lower right leaning axis DR, respectively.

For example, as shown in Fig. 5, when the rider causes the leaning vehicle 1 to lean to the left, the head pipe 211 leans to the left relative to the vertical direction. When the head pipe 211 leans, the upper cross member 51 turns counterclockwise about the upper intermediate leaning axis UI which passes the upper intermediate axis supporting portion 211b relative to the head pipe 211 when viewed from the front of the leaning vehicle 1. Similarly, the lower cross member 52 turns counterclockwise about the lower intermediate axis supporting portion DI which passes through the lower intermediate axis supporting portion 211b relative to the head pipe 211 when viewed from the front of the leaning vehicle 1. As a result, the upper cross member 51 moves to the left in the left-right direction of the body frame 21 relative to the lower cross member 52.

As a result of the upper cross member 51 moving in the way described above, the upper cross member 51 turns counterclockwise about the upper left leaning axis UL that passes through the upper left axis supporting portion 53a and the upper right leaning axis UR that passes through the upper right axis supporting portion 54a relative to the left side member 53 and the right side member 54, respectively, when viewed from the front of the leaning vehicle 1. Similarly, the lower cross member 52 turns counterclockwise about the lower left leaning axis DL that passes through the lower left axis supporting portion 53b and the lower right leaning axis DR that passes through the lower right axis supporting portion 54b relative to the left side member 53 and the right side member 54, respectively, when viewed from the front of the leaning vehicle 1. As a result, the left side member 53 and the right side member 54 lean to the left of the leaning vehicle 1 relative to the vertical direction while maintaining the postures parallel to the head pipe 211.

As this occurs, the lower cross member 52 moves to the left in the left-right direction of the body frame 21 relative to the tie rod 77. As a result of the lower cross member 52 moving as described above, the tie rod 77 turns relative to the intermediate joint 74, the left joint 75, and the right joint 76 about the intermediate joint leaning axis, the left joint leaning axis, and the right joint leaning axis, respectively. As a result, the tie rod 77 maintains its posture parallel to the upper cross member 51 and the lower cross member 52.

The left suspending portion 62, which is supported on the left side member 53 via the left turnable member, leans to the left of the leaning vehicle 1 as the left side member 53 leans to the left of the leaning vehicle 1. In association with the leaning of the left suspending portion 62, the left front wheel 31 supported on the left suspending portion 62 leans to the left of the leaning vehicle 1 while maintaining its posture parallel to the head pipe 211.

The right suspending portion 63, which is supported on the right side member 54 via the right turnable member, leans to the left of the leaning vehicle 1 as the right side member 54 leans to the left of the leaning vehicle 1. In association with the leaning of the right suspending portion 63, the right front wheel 32 supported on the right suspending portion 63 leans to the left of the leaning vehicle 1 while maintaining its posture parallel to the head pipe 211.

The leaning operations of the left front wheel 31 and the right front wheel 32 are described based on the vertical direction. However, when the leaning vehicle 1 leans (when the link mechanism 5 is in operation), the up-down direction of the body frame 21 does not coincide with the vertical up-down direction. In the case where the up-down direction of the body frame 21 is set as the reference, when the link mechanism 5 is in operation, the left front wheel 31 and the right front wheel 32 change their relative positions in the up-down direction of the body frame 21. In other words, the link mechanism 5 changes the relative positions of the left front wheel 31 and the right front wheel 32 in the up-down direction of the body frame 21 to thereby cause the body frame 21 to lean to the left or right of the leaning vehicle 1 relative to the vertical direction. This causes the leaning vehicle 1 to turn to the left.

When the rider causes the leaning vehicle 1 to lean to the right, the relevant elements lean to the right. This causes the leaning vehicle 1 to turn to the right. Since the elements only move the other way around in relation to the left-right direction, the detailed description thereof will be omitted here.

As shown in Figs. 1, 3 and 4, the leaning vehicle 1 includes a load transmission mechanism 8. The load transmission mechanism 8 includes a left foot placement portion 81 and a right foot placement portion 82. The left foot placement portion 81 includes a left foot placement face 811 and a left connecting member 812. The right foot placement portion 82 includes a right foot placement face 821 and a right connecting member 822.

The left foot placement face 811 is a portion where a left foot of a standing rider is placed. The left connecting member 812 connects the left foot placement face 811 and the left side member 53 of the link mechanism 5 together. As shown in Fig. 1, the left connecting member 812 includes a left front portion 812a which extends in the up-down direction of the body frame 21 and a left rear portion 812b which extends in the front-rear direction of the body frame. The left front portion 812a is joined to the left side member 53. The left rear portion 812b supports the left foot placement face 811. The left foot placement portion 81 is configured to transmit a load inputted through the left foot placement face 811 to the left link portion 5L.

The right foot placement face 821 is a portion where a right foot of the standing rider placed. The right connecting member 822 connects the right foot placement face 821 and the right side member 54 of the link mechanism 5 together. As with the left connecting member 812, the right connecting member 822 includes a right front portion 822a which extends in the up-down direction of the body frame 21 and a right rear portion 822b which extends in the front-rear direction of the body frame. The right front portion 822a is joined to the right side member 54. The right rear portion 822b supports the left foot placement face 821. The right connecting member 822 has a similar configuration to that of the left connecting member 812, and hence, only reference numerals therefor are illustrated in Fig. 1. The right foot placement portion 82 is configured to transmit a load inputted through the right foot placement face 821 to the right link portion 5R.

According to the configuration described above, the leaning of the body frame 21 can be controlled by individually controlling the load applied to the left foot placement face 811 through the left foot of the rider and the load applied to the right foot placement face 821 through the right foot of the rider.

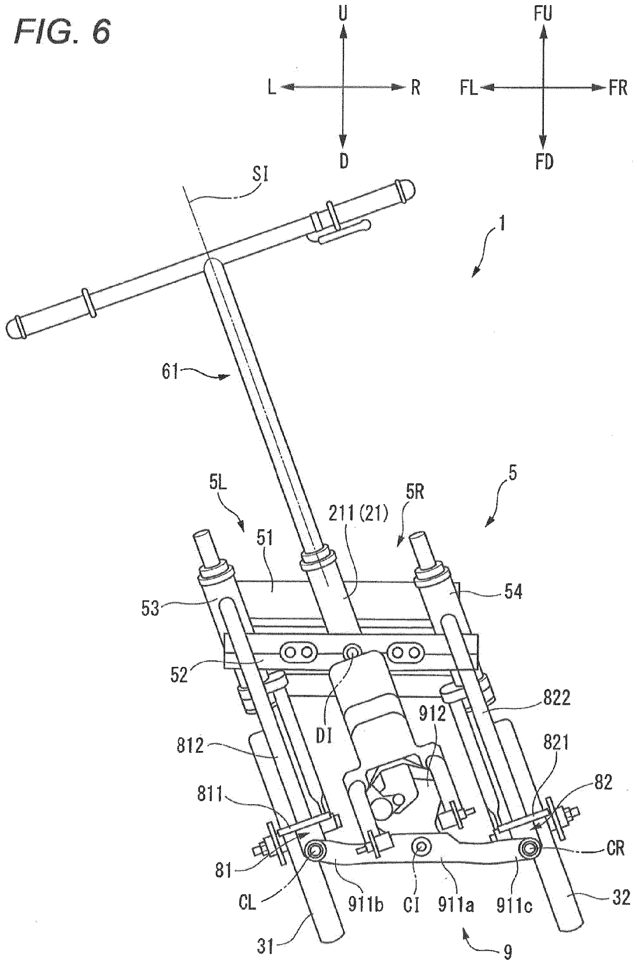

For example, as shown in Fig. 6, when the body frame 21 leans to the left of the leaning vehicle 1, the left link portion 5L is displaced to a position lying above the right link portion 5R in the up-down direction of the body frame 21. Fig. 6 is a rear view of the front portion of the leaning vehicle 1 as viewed from rear in the front-rear direction of the body frame 21 under a condition that the body frame 21 is caused to lean to the left. In Fig. 6, the illustration of the rear wheel 4 is omitted. At this time, when a load is applied to the left link portion 5L through the left foot placement face 811 by the left foot of the rider, a force acts to displace the left link portion 5L downward in the up-down direction of the body frame 21, whereby the leaning of the body frame 21 to the left of the leaning vehicle 1 can be restrained.

On the contrary, when the body frame 21 leans to the right of the leaning vehicle 1, the right link portion 5R is displaced to a position lying above the left link portion 5L in the up-down direction of the body frame 21. At this time, when a load is applied to the right link portion 5R through the right foot placement face 821 by the right foot of the rider, a force acts to displace the right link portion 5R downward in the up-down direction of the body frame 21, whereby the leaning of the body frame 21 to the right of the leaning vehicle 1 can be restrained.

In association with the leaning of the body frame 21, the direction that the left foot placement face 811 and the direction that the right foot placement face 821 change. However, angles formed by the direction in which the head pipe 211 extends (the direction in which the intermediate steering axis SI extends) and the left foot placement face 811 and the right foot placement face 821 do not change. In other words, the left foot placement face 811 and the right foot placement face 821 do not change their angles or postures relative to the body frame 21.

As shown in Figs. 1 and 2, the leaning vehicle 1 includes a restriction mechanism 9. The restriction mechanism 9 includes a first portion 91 and a second portion 92. The first portion 91 is a portion that is displaced relative to the body frame 21. The second portion 92 is a portion that is not displaced relative to the body frame 21.

As shown in Figs. 2, 4, and 6, the first portion 91 includes a connecting member 911. The connecting member 911 includes an intermediate portion 911a, a left portion 911b, and a right portion 911c. The intermediate portion 911a is connected to the main frame 212 so as to be turnable about a connecting intermediate leaning axis CI. The connecting intermediate leaning axis CI extends in the front-rear direction of the body frame 21. The left portion 911b is connected to the left foot placement portion 81 so as to be turnable about a connecting left leaning axis CL. The connecting left leaning axis CL extends in the front-rear direction of the body frame 21. The right portion 911c is connected to the right foot placement portion 82 so as to be turnable about a connecting right leaning axis CR. The connecting right leaning axis CR extends in the front-rear direction of the body frame 21.

As is shown in Fig. 6, when the rider causes the leaning vehicle 1 to lean to the left, the main frame 212 leans to the left relative to the vertical direction. When the main frame 212 leans, the intermediate portion 911a turns in the clockwise direction about the connecting intermediate leaning axis CI relative to the main frame 212 when viewed from the rear of the leaning vehicle 1. Similarly, the left portion 911b turns in the clockwise direction about the connecting left leaning axis CL relative to the left foot placement portion 81 when viewed from the rear of the leaning vehicle 1. Similarly, the right portion 911c turns in the clockwise direction about the connecting right leaning axis CR relative to the right foot placement portion 82 when viewed from the rear of the leaning vehicle 1. As a result, the connecting member 911 maintains its posture parallel to the upper cross member 51 and the lower cross member 52.

When the rider causes the leaning vehicle 1 to lean to the right, the main frame 212 leans to the right relative to the vertical direction. Since the connecting member 911 merely turns in an opposite direction, the operation of the connecting member 911 will not be described in detail here.

The first portion 91 includes a plate member 912. The plate member 912 is fixed to an intermediate portion 911a of the connecting member 911. That is, the plate member 912 can turn together with the connecting member 911 relative to the main frame 212. The plate member 912 has an outer edge portion which extends arcuately.

As shown in Fig. 2, the second portion 92 includes a caliper 921. The caliper 921 is fixed to the main frame 212. The caliper 921 includes a pair of pads. The pair of pads are arranged so as to be arranged side by side in the front-rear direction of the body frame 21. Each pad is formed of a highly frictional material. The outer edge portion of the plate member 912 is positioned between the pair of pads of the caliper 921. A gap exists between the outer circumferential portion of each of the pads and the plate member 912. Thus, the plate member 912 can move relative to the caliper 921.

When a predetermined operation is performed by the rider, the pair of pads of the caliper 921 are displaced so as to reduce the gap therebetween and are then brought into contact with the outer edge portion of the plate member 912. The connecting member 911 is restricted from turning relative to the main frame 212 as a result of a frictional force being applied to the plate member 912. As a result, the left foot placement portion 81 and the right foot placement portion 82 are restricted from being displaced relative to the body frame 21.

Thus, as has been described heretofore, in the leaning vehicle 1 according to this embodiment, the left front wheel 31 and the right front wheel 32 are arranged so as to be arranged side by side in the left-right direction of the body frame 21. The intermediate steering axis supporting portion 211a of the head pipe 211 defines the intermediate steering axis SI that extends in the up-down direction of the body frame 21. The steering member 61 is provided so as to be turnable about the intermediate steering axis SI relative to the body frame 21.

The link mechanism 5 includes the left link portion 5L and the right link portion 5R. The left link portion 5L includes the left steering axis supporting portion that defines the left steering axis SL. The left steering axis SL extends in the up-down direction of the body frame 21 on the left of the intermediate steering axis supporting portion 211a in the left-right direction of the body frame 21. The right link portion 5R includes the right steering axis supporting portion that defines the right steering axis SR. The right steering axis SR extends in the up-down direction of the body frame 21 on the right of the intermediate steering axis supporting portion 211a in the left-right direction of the body frame 21. The link mechanism 5 causes the body frame 21 to lean to the left of the leaning vehicle 1 when the leaning vehicle 1 is turned to the left and causes the body frame 21 to lean to the right of the leaning vehicle 1 when the leaning vehicle 1 is turned to the right by changing the relative positions of the left front wheel 31 and the right front wheel 32 relative to the body frame 21.

The left suspending portion 62 supports the left front wheel 31. The left suspending portion 62 is connected to the left steering axis supporting portion so as to be turnable about the left steering axis SL. The right suspending portion 63 supports the right front wheel 32. The right suspending portion 63 is connected to the right steering axis supporting portion so as to be turnable about the right steering axis SR. The steering force transmission mechanism 7 turns the left suspending portion 62 and the right suspending portion 63 about the left steering axis SL and the right steering axis SR, respectively, in the direction in which the steering member 61 is turned in association with the turning of the steering member 61.

The load transmission mechanism 8 includes a left foot placement portion 81 and a right foot placement portion 82. The left foot placement portion 81 includes the left foot placement face 811 where the left foot of the standing rider is placed. An angle of the left foot placement face 811 relative to the body frame 21 is unchanged. The right foot placement portion 82 includes the right foot placement face 821 where the right foot of the standing rider is placed. An angle of the right foot placement face 821 relative to the body frame 21 is unchanged. The load transmission mechanism 8 transmits a load to the left link portion 5L through the left foot placement face 811 and transmits a load to the right link portion 5R through the right foot placement face 821. The restriction mechanism 9 restricts the left foot placement portion 81 and the right foot placement portion 82 from being displaced relative to the body frame 21.

According to the configuration described above, the leaning of the body frame 21 can be controlled by applying the load to the link mechanism 5 directly through the feet of the standing rider. Thus, the leaning vehicle 1 can be provided with the light and quick operability while the leaning vehicle 1 is running. Since the angle of the left foot placement face 811 relative to the body frame 21 and the angle of the right foot placement face 821 relative to the body frame 21 are unchanged, the faces on which the feet of the standing rider are placed follow the body frame 21 which is leaning (in other words, the respective angles of the foot placement faces relative to a road surface change as the body frame 21 leans). As a result, the integrity of the rider with the leaning vehicle 1 can be enhanced while the leaning vehicle 1 is running.

Further, the left foot placement portion 81 and the right foot placement portion 82 can be restricted from being displaced relative to the body frame 21 by causing the restriction mechanism 9 to operate, for example, in the upright state (the state where each foot placement face is parallel to the road surface) of the body frame 21. As a result, the leaning vehicle 1 can be restricted from changing its posture in association with a change in load applied to the left foot placement face 811 and the right foot placement face 821, whereby the rider can easily get on and off the leaning vehicle 1. Also in a condition that the body frame 21 is caused to lean (each foot placement face are inclined relative to the road surface), the leaning vehicle 1 can be restricted from changing its posture in association with a change in load applied to the left foot placement face 811 and the right foot placement face 821, whereby the rider can easily get on and off the leaning vehicle 1. Consequently, it is possible to improve the ride comfort of the leaning vehicle 1 in which the body frame 21 is caused to lean by operate the link mechanism 5 through the load transmission mechanism 8.
the connecting member 911 (an example of the connecting portion) can turn about the connecting intermediate leaning axis CI that extends in the front-rear direction of the body frame 21 and connects the left foot placement portion 81 and the right foot placement portion 82 to the body frame 21. By providing the connecting member 911 configured as described above, the rigidities of the left foot placement portion 81 and the right foot placement portion 82 against loads applied thereto can be enhanced.

The plate member 912, constituting part of the restriction mechanism 9, is provided on the connecting member 911. That is, the left foot placement portion 81 and the right foot placement portion 82 can be restricted from being displaced by making use of the configuration for enhancing the rigidities of the left foot placement portion 81 and the right foot placement portion 82 against loads applied thereto. Loads applied to the left foot placement portion 81 and the right foot placement portion 82 are partially absorbed by the connecting member 911. As a result, compared with a case where the loads are borne only by the left foot placement portion 81 and the right foot placement portion 82, the configuration for restricting the displacement of the left foot placement portion 81 and the right foot placement portion 82 can be simplified.

As shown in Fig. 3, the connecting member 911 is provided in a position closer to the left foot placement face 811 and the right foot placement face 821 than the link mechanism 5. More specifically, the connecting member 911 is provided in a position lying closer to an intermediate point of the left foot placement face 811 and an intermediate point of the right foot placement face 821 in relation to the front-rear direction of the body frame 21 than an intermediate point between a front end of the link mechanism 5 (a front end of the front element 521 of the lower cross member 52 in this embodiment) and a rear end of the link mechanism 5 (a rear end of the rear element 522 of the lower cross member 52 in this embodiment) in relation to the front-rear direction of the body frame 21. On the other hand, as shown in Fig. 4, the connecting member 911 is provided in a position lying closer to the left foot placement face 811 and the right foot placement face 821 in relation to the up-down direction of the body frame 21 than an intermediate point according to the up-down direction of the body frame 21 between an upper end and a lower end of the link mechanism 5 (in this embodiment, an intermediate point between an upper end and a lower end of the left side member 53 along the left steering axis SL and an intermediate point between an upper end and a lower end of the right side member 54 along the right steering axis SR).

According to this configuration, the displacement of the left foot placement portion 81 and the right foot placement portion 82 can be restricted in the position lying closer to the portion where loads are applied. Compared with a case where loads are restricted from a farther position, the configuration for restricting the displacement of the left foot placement portion 81 and the right foot placement portion 82 can be simplified.

The restriction mechanism 9 includes the caliper 921. The caliper 921 is the device for restricting the turning of the connecting member 911 by applying a frictional force to the connecting member 911.

In this case, a restriction force against the displacement of the left foot placement portion 81 and the right foot placement portion 82 can be applied in any posture independently of a leaning angle of the body frame 21.

The caliper 921 is not always required to include the pair of pads. The number of pads may be one or three or more, as long as a frictional force can be applied with which a desired restricting effect can be obtained.

In this embodiment, the left foot placement portion 81 is provided on the left side member 53 of the link mechanism 5 that constitutes the parallel four-joint link. The right foot placement portion 82 is provided on the right side member 54 of the link mechanism 5. The left side member 53 is a portion of the left link portion 5L which can be displaced relative to the body frame 21 in accordance with the leaning of the body frame 21, and which cannot be displaced relative to the body frame 21 in accordance with the displacement of the steering force transmission mechanism 7. The right side member 54 is a portion of the right link portion 5R which can be displaced relative to the body frame 21 in accordance with the leaning of the body frame 21, and which cannot be displaced relative to the body frame 21 in accordance with the displacement of the steering force transmission mechanism 7.

According to this configuration, when the leaning vehicle 1 is steered to be turned, the left foot placement portion 81 and the right foot placement portion 82 are not displaced in a direction in which the steering member 61 is turned. In other words, moving ranges of the left foot placement portion 81 and the right foot placement portion 82 are limited to the up-down direction and the leaning direction of the body frame 21. Consequently, the leaning vehicle 1 can be restrained from being enlarged in size even in the case where the load transmission mechanism 8 is provided.

In addition, as shown in Fig. 4, the left foot placement portion 81 and the right foot placement portion 82 are displaced in the up-down direction of the body frame 21 in association with leaning of the body frame 21. As a result, the leaning vehicle 1 can be further restrained from being enlarged in size by providing the load transmission mechanism 8.

In addition, the movable ranges of the left foot placement portion 81 and the right foot placement portion 82 can be restrained from being expanded in the left-right direction of the body frame 21 when the leaning vehicle 1 leans. This is because the respective movable ranges of the left side member 53 and the right side member 54 in the left-right direction of the body frame 21 when the leaning vehicle 1 leans are smaller than the respective movable ranges thereof in the up-down direction of the body frame 21. The effect of this configuration described above becomes remarkable when the positions of the left foot placement face 811 and the right foot placement face 821 are spaced away from a turning center (the lower intermediate leaning axis DI) of the lower cross member 52 particularly as in this embodiment.

The left foot placement face 811, the right foot placement face 821, and the restriction mechanism 9 are disposed below the link mechanism 5 in the up-down direction of the body frame 21.

That is, the restriction mechanism 9 is provided at the portion lying closer to the left foot placement face 811 and the right foot placement face 821 to which loads are applied from the feet of the rider. Accordingly, the displacement restricting effect of the left foot placement portion 81 and the right foot placement portion 82 can be enhanced while simplifying the configuration of the restriction mechanism 9. In addition, the center of gravity of the leaning vehicle 1 is lowered, thereby improving the ride comfort of the leaning vehicle 1.

As shown in Figs. 1 and 3, the handlebar 611 (an example of the grip member) that is gripped on by the rider is disposed ahead of a front end 811a of the left foot placement face 811 and a front end 821a of the right foot placement face 821 in the front-rear direction of the body frame 21.

According to this configuration, a space where the rider can stretch his or her arms is easily ensured directly ahead of the body of the rider. In addition, a position of the center of gravity of the leaning vehicle 1 in the front-rear direction of the body frame 21 can be easily adjusted. As a result, it is possible to further improve the ride comfort of the leaning vehicle 1 in which the body frame 21 is caused to lean by operating the link mechanism 5 through the load transmission mechanism 8.

The embodiment described heretofore is intended to facilitate the understanding of the invention and is not intended to limit the invention. It is obvious that the invention can be modified within the scope of the appended claims.

In the embodiment, the restriction mechanism 9 is disposed below the link mechanism 5 in the up-down direction of the body frame 21. However, the arrangement of the restriction mechanism 9 is not limited to the arrangement described in the embodiment.

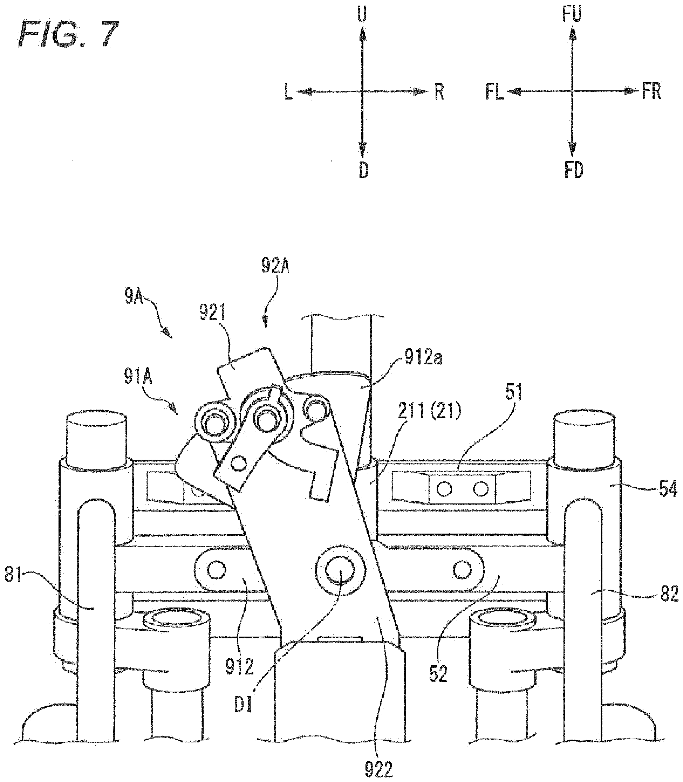

Fig. 7 shows a restriction mechanism 9A according to a first modified example. The restriction mechanism 9A includes a first portion 91A and a second portion 92A. The first portion 91A is a portion that is displaced relative to the body frame 21. The second portion 92A is a portion that is not displaced relative to the body frame 21.

The first portion 91A includes a plate member 912. The plate member 912 is fixed to the lower cross member 52 of the link mechanism 5. That is, the plate member 912 can turn together with the lower cross member 52 relative to the head pipe 211. The plate member 912 has an outer edge portion 912a which extends arcuately.

The second portion 92A includes a caliper 921 and a support member 922. The support member 922 support the caliper 921. Although it is not illustrated, the support member 922 is fixed to the main frame 212. The caliper 921 includes a pair of pads. The pair of pads are arranged so as to be arranged side by side in the front-rear direction of the body frame 21. Each pad is formed of a highly frictional material. The outer edge portion 912a of the plate member 912 is positioned between a pair of pads of the caliper 921. A gap exists between the outer circumferential portion of each of the pads and the plate member 912. Thus, the plate member 912 can move relative to the caliper 921.

When a predetermined operation is performed by the rider, the pair of pads of the caliper 921 are displaced so as to reduce the gap therebetween and are then brought into contact with the outer edge portion of the plate member 912. The lower cross member 52 is restricted from turning relative to the head pipe 211 by applying a frictional force to the plate member 912. As described above, the left foot placement portion 81 and the right foot placement portion 82 are provided on the left side member 53 and the right side member 54, respectively, which are connected to the lower cross member 52. Accordingly, the lower cross member 52 is restricted from turning relative to the head pipe 211, whereby the left foot placement portion 81 and the right foot placement portion 82 are restricted from being displaced relative to the body frame 21.

The lower cross member 52 (an example of the connecting portion) can turn about the lower intermediate leaning axis DI that extends in the front-rear direction of the body frame 21 and connects the left foot placement portion 81 and the right foot placement portion 82 to the body frame 21. The plate member 912, constituting part of the restriction mechanism 9A, is provided on the lower cross member 52. Loads applied to the left foot placement portion 81 and the right foot placement portion 82 is partially absorbed by the lower cross member 52 having a relatively high rigidity. As a result, compared with a case where the loads are borne only by the left foot placement portion 81 and the right foot placement portion 82, the configuration for restricting the displacement of the left foot placement portion 81 and the right foot placement portion 82 can be simplified.

The caliper 921 is a device for restricting the turning of the lower cross member 52 by applying a frictional force to the lower cross member 52. Consequently, also in this modified example, a restriction force against the displacement of the left foot placement portion 81 and the right foot placement portion 82 can be applied in any posture, independently of the leaning angle of the body frame 21.

In the above embodiment and the first modified example, the restriction mechanism 9 includes the caliper 921 configured to restrict the displacement of the left foot placement portion 81 and the right foot placement portion 82 through application of the frictional force. However, the operation principle of the restriction mechanism 9 is not limited to the one described therein.

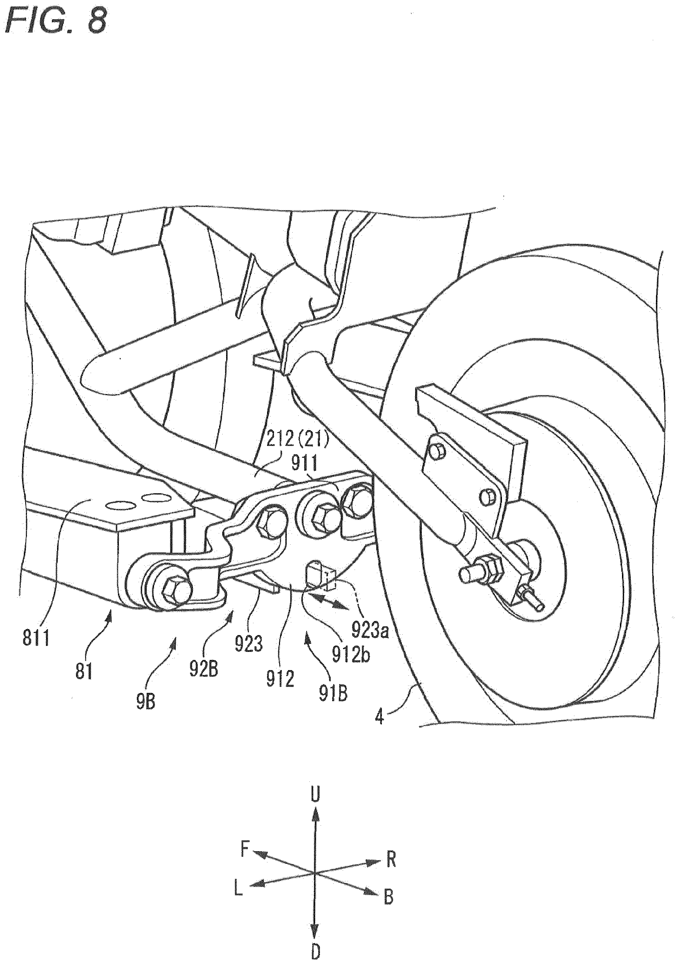

Fig. 8 shows a restriction mechanism 9B according to a second modified example. The restriction mechanism 9B includes a first portion 91B and a second portion 92B. The first portion 91B is a portion that is displaced relative to the body frame 21. The second portion 92B is a portion that is not displaced relative to the body frame 21.

The first portion 91B includes a plate member 912. The plate member 912 is fixed to an intermediate portion 911a of the connecting member 911. That is, the plate member 912 can turn together with the connecting member 911 relative to the main frame 212. The plate member 912 has an opening 912b.

The second portion 92B includes a solenoid 923. The solenoid 923 is fixed to the main frame 212. The solenoid 923 includes a rod 923a that can be displaced in the front-rear direction of the body frame 21. In a normal state, a distal end of the rod 923a is disposed directly ahead of the plate member 912 in the front-rear direction of the body frame 21. Thus, the plate member 912 and the solenoid 923 can be displaced relative to each other in association with turning of the connecting member 911.

In Fig. 8, the opening 912b in the plate member 912 faces the rod 923a of the solenoid 923. When the rider performs a predetermined operation in this state, the rod 923a projects rearward. As a result, as indicated by dashed chain lines in Fig. 8, the rod 923a is brought into engagement with the opening 912b, whereby the connecting member 911 is restricted from turning relative to the main frame 212. This restricts the left foot placement portion 81 and the right foot placement portion 82 from being displaced relative to the body frame 21.

According to this configuration, although the leaning angle of the body frame 21 to which a restriction force can be applied is limited, the restriction mechanism 9B can be realized by the relatively simple and small mechanism.

The shape of the opening 212b is not limited to the shape shown in Fig. 8. The opening 212b can take any arrangement and shape as long as it can be brought into engagement with the rod 923a to restrict the turning of the connecting member 911. For example, the opening 912b can be a cutout that is also opened downward in the up-down direction of the body frame 21.

In the embodiment described above, the left foot placement portion 81 of the load transmission mechanism 8 is provided on the left side member 53 constituting the left link portion 5L. On the other hand, the right foot placement portion 82 of the load transmission mechanism 8 is provided on the right side member 54 constituting the right link portion 5R. However, the left foot placement portion 81 and the right foot placement portion 82 may be provided at other portions of the link mechanism 5.

For example, the left foot placement portion 81 can be provided at a left portion of the lower cross member 52. More specifically, a left front portion 812a of the left connecting member 812 can be joined to a left portion of the rear element 522 of the lower cross member 52. Similarly, the right foot placement portion 82 can be provided at a right portion of the lower cross member 52. More specifically, a right front portion 822a of the right connecting member 822 can be joined to a right portion of the rear element 522 of the lower cross member 52.

Alternatively, similar to the lower cross member 52, a rear element can also be provided for the upper cross member 51. In this case, the left front portion 812a of the left connecting member 812 can be joined to at least one of the rear element of the upper cross member 51 and the rear element 522 of the lower cross member 52. Similarly, the right front portion 822a of the right connecting member 822 can be joined to at least one of the rear element of the upper cross member 51 and the rear element 522 of the lower cross member 52.

Also in this example, when the leaning vehicle 1 is steered to be turned, the left foot placement portion 81 and the right foot placement portion 82 are not displaced in a direction in which the steering member 61 is turned. In other words, moving ranges of the left foot placement portion 81 and the right foot placement portion 82 are limited to the up-down direction and the leaning direction of the body frame 21. Consequently, the leaning vehicle 1 can be restrained from being enlarged in size even in the case where the load transmission mechanism 8 is provided.

In addition, also in this example, the left foot placement portion 81 and the right foot placement portion 82 are displaced in the up-down direction of the body frame 21 in association with leaning of the body frame 21. As a result, the leaning vehicle 1 can be further restrained from being enlarged in size by providing the load transmission mechanism 8.

In the embodiment described above, the load transmission mechanism 8 is configured in such a manner that the load applied to the left foot placement face 811 through the left foot of the rider is transmitted to the left link portion 5L of the link mechanism 5, and that the load applied to the right foot placement face 821 through the right foot of the rider is applied to the right link portion 5R of the link mechanism 5. However, a configuration may be adopted in which by providing an appropriate link mechanism on the load transmission mechanism 8, a load applied to the left foot placement face 811 through the left foot of the rider is transmitted to the right link portion 5R of the link mechanism 5 while a load applied to the right foot placement face 821 through the right foot of the rider is applied to the left link portion 5L of the link mechanism 5.

In the embodiment described above, the link mechanism 5 includes the upper cross member 51 and the lower cross member 52. However, a configuration may be adopted in which the link mechanism 5 includes only either the upper cross member 51 or the lower cross member 52 as an example of the cross member. In addition, a configuration can be adopted in which the link mechanism 5 includes a cross member other than the upper cross member 51 and the lower cross member 52. The "upper cross member" and the "lower cross member" are merely so called based on their relative positional relationship in the up-down direction. The lower cross member is not intended to imply an uppermost cross member in the link mechanism 5. The upper cross member" implies a cross member which lies above another cross member. The lower cross member is not intended to imply a lowermost cross member in the link mechanism 5. The "lower cross member" implies a cross member which lies below another cross member.

In each of the above embodiment and its modified examples, the link mechanism 5 includes the so-called parallel four-joint link system. However, a so-called double wishbone-type link mechanism can be adopted, provided that the body frame 21 can be caused to lean to the left or right of the leaning vehicle 1 by changing the relative positions of the left front wheel 31 and the right front wheel 32 to the body frame 21.

In this case, the link mechanism 5 is supported on the body frame 21 and includes a left arm mechanism and a right arm mechanism.

The left arm mechanism includes, in addition to the left side member 53 described above, a left upper arm member, a left lower arm member, and a left knuckle. A right portion of the left upper arm member and a right portion of the left lower arm member are both supported on the body frame 21 and are allowed to turn about leaning axes extending in the front-rear direction of the body frame 21. A left portion of the left upper arm member and a left portion of the left lower arm member are both supported on the left side member 53 and are allowed to turn about leaning axes extending in the front-rear direction of the body frame 21. The left knuckle corresponds to the left suspending portion 62 described above and is connected to the left side member 53 and the steering force transmission mechanism 7. The left knuckle can turn about the left steering axis SL in accordance with a steering direction of the leaning vehicle 1. Similar to the embodiment described above, the left connecting member 812 of the load transmission mechanism 8 connects the left foot placement face 811 with the left side member 53.

The right arm mechanism includes, in addition to the right side member 54 described above, a right upper arm member, a right lower arm member, and a right knuckle. A left portion of the right upper arm member and a left portion of the right lower arm member are both supported on the body frame 21 and are allowed to turn about leaning axes extending in the front-rear direction of the body frame 21. A right portion of the right upper arm member and a right portion of the right lower arm member are both supported on the right side member 54 and are allowed to turn about leaning axes extending in the front-rear direction of the body frame 21. The right knuckle corresponds to the right suspending portion 63 described above and is connected to the right side member 54 and the steering force transmission mechanism 7. The right knuckle can turn about the right steering axis SR in accordance with a steering direction of the leaning vehicle 1. Similar to the embodiment described above, the right connecting member 822 of the load transmission mechanism 8 connects the right foot placement face 821 with the right side member 54.

In the embodiment that has been described heretofore, the leaning vehicle 1 is equipped with a single rear wheel 4. However, the number of rear wheels may be plural.

In the embodiment described above, the handlebar 611 is made up of the single member that extends in the left-right direction of the body frame 21. However, the handlebar 611 may be made up of individual members including a left handlebar portion configured to be operated by the left hand of the rider and a right handlebar portion configured to be operated by the right hand of the rider, provided that steering force to turn the left front wheel 31 and the right front wheel 32 can be inputted through the handlebar 61.

In the above embodiment, the steering force transmission mechanism 7 includes the intermediate transmission plate 71, the left transmission plate 72, the right transmission plate 73, the intermediate joint 74, the left joint 75, the right joint 76, and the tie rod 77. However, the intermediate transmission plate 71, the left transmission plate 72, the right transmission plate 73, the intermediate joint 74, the left joint 75, and the right joint 76 can be replaced with an appropriate mechanism such as a universal joint, provided that a steering force inputted from the handlebar 611 can be transmitted to the left front wheel 31 and the right front wheel 32 by way of the tie rod 77.

The expression "displaced along" used in this specification in relation to the direction of the rectilinear motion implies a displacement in a direction that coincides with a reference direction or a direction parallel to the reference direction. The expression "displaced along" used in this specification in relation to the direction of the arcuate motion implies a displacement along any arc that is concentric with the center of curvature of a reference arc.

When used in this description, the expression "fixed relative to the body frame 21" implies that a certain part or member is caused to lean in the left-right direction of the vehicle 1 together with the body frame 21 when the body frame 21 is caused to lean in the left-right direction of the vehicle 1. When used in this description, the expression "fixed relative to the body frame 21" may comprehend not only a case where a certain part or member is directly fixed to the body frame but also a case where the certain part of member is fixed to a vehicle component (a fuel tank, a bracket, the power unit 22, etc.) which is fixed on the body frame 21. Here the term "fixed" may comprise a case where the part or member is fixed by way of a damping member or the like.

The disclosed concept can be implemented with many different embodiments. This description should be understood to provide a principle embodiment of the disclosed concept. The preferred embodiment which is at least described or illustrated in this description is so described or illustrated based on the understanding that the embodiment is not intended to limit the disclosed concept, which is defined by the appended claims.

The limitative matters of claims should be construed widely based on terms used in the claims and hence should not be limited by the embodiment described in this specification or the prosecution of this patent application. Those embodiments should be construed as non-exclusive. For example, in this description, the terms "preferable" and "may" should be construed as being non-exclusive, and those terms mean, respectively, that it is "preferable but not limited thereto" and that it "may be acceptable but not limited thereto."

## Claims

1. A leaning vehicle (1) comprising:
a body frame (21);
a left front wheel (31) and a right front wheel (32) that are arranged side by side in a left-right direction of the body frame (21);
an intermediate steering axis supporting portion (211a) defining an intermediate steering axis (SI) extending in an up-down direction of the body frame (21);
a steering member (61) that is turnable about the intermediate steering axis (SI) relative to the body frame (21);
a link mechanism (5) including:
a left link portion (5L) including a left steering axis supporting portion defining a left steering axis (SL) extending in the up-down direction of the body frame (21) on the left of the intermediate steering axis supporting portion (211a) in the left-right direction of the body frame (21); and
a right link portion (5R) including a right steering axis supporting portion defining a right steering axis (SR) extending in the up-down direction of the body frame (21) on the right of the intermediate steering axis supporting portion (211a) in the left-right direction of the body frame (21),
the link mechanism (5) configured to change positions of the left front wheel (31) and the right front wheel (32) relative to the body frame (21) to cause the body frame (21) to lean leftward when the leaning vehicle (1) is steered leftward and to cause the body frame (21) to lean rightward of the leaning vehicle (1) when the leaning vehicle (1) is steered rightward,
a left suspending portion (62) connected to the left steering axis supporting portion so as to be turnable about the left steering axis (SL), and supporting the left front wheel (31);
a right suspending portion (63) connected to the right steering axis supporting portion so as to be turnable about the right steering axis (SR), and supporting the right front wheel (32);
a steering force transmission mechanism (7) configured to cause the left suspending portion (62) and the right suspending portion (63) to turn about the left steering axis (SL) and the right steering axis (SR) respectively, in a same direction as a direction that the steering member (61) is turned;
a load transmission mechanism (8) including:
a left foot placement portion (81) having a left foot placement face (811) on which a left foot of a standing rider is placed, wherein an angle of the left foot placement face (811) relative to the body frame (21) is unchanged; and
a right foot placement portion (82) having a right foot placement face (821) on which a right foot of the standing rider is placed, wherein an angle of the right foot placement face (821) relative to the body frame (21) is unchanged;
the load transmission mechanism (8) configured to transmit load through the left foot placement face (811) to one of the left link portion (5L) and the right link portion (5R), and to transmit load through the right foot placement face (821) to the other one of the left link portion (5L) and the right link portion (5R);
a restriction mechanism (9, 9A, 9B) configured to restrict displacement of the left foot placement portion (81) and the right foot placement portion (82) relative to the body frame (21); and
a connecting portion (52, 911) connecting the left foot placement portion (81) and the right foot placement portion (82), the connecting portion (52, 911) being turnable about an axis extending in a front-rear direction,
wherein a portion of the restriction mechanism (9, 9A, 9B) is provided in the connecting portion (52, 911), and **characterised in that** the restriction mechanism (9, 9A, 9B) includes a) a device (921) configured to restrict a turning motion of the connecting portion (52, 911) by applying a friction force, or b) a device (923a) configured to restrict a turning motion of the connecting portion (911) by engaging with the connecting portion (911).

2. The leaning vehicle (1) according to claim 1,
wherein the connecting portion (52, 911) is disposed in a position that is closer to the left foot placement face (811) and the right foot placement face (821) than the link mechanism (5).

3. The leaning vehicle (1) according to any one of claims 1 or 2,
wherein the left foot placement portion (81) is provided in a portion in the left link portion (5L) where is displaceable relative to the body frame (21) in accordance with a leaning motion of the body frame (21) and is not displaceable relative to the body frame (21) in accordance with displacement of the steering force transmission mechanism (7); and
wherein the right foot placement portion (82) is provided in a portion in the right link portion (5R) where is displaceable relative to the body frame (21) in accordance with a leaning motion of the body frame (21) and is not displaceable relative to the body frame (21) in accordance with displacement of the steering force transmission mechanism (7).

4. The leaning vehicle (1) according to claim 3,
wherein the left foot placement portion (81) and the right foot placement portion (82) are displaced in the up-down direction of the body frame (21) in accordance with a leaning motion of the body frame (21).

5. The leaning vehicle (1) according to any one of claims 1 to 4,
wherein the link mechanism (5) includes an upper cross member (51), a lower cross member (52), a left side member (53), and a right side member (54);
wherein the upper cross member (51), the lower cross member (52), the left side member (53) and the right side member (54) are connected with one another such that the upper cross member (51) and the lower cross member (52) are held in postures that are parallel to each other, and such that the left side member (53) and the right side member (54) are held in postures that are parallel to each other;
wherein the left link portion (5L) includes the left side member (53), a left portion of the upper cross member (51), and a left portion of the lower cross member (52); and
wherein the right link portion (5R) includes the right side member (54), a right portion of the upper cross member (51), and a right portion of the lower cross member (52).

6. The leaning vehicle (1) according to claim 5,
wherein the left foot placement portion (81) is provided on the left side member (53); and
wherein the right foot placement portion (82) is provided on the right side member (54).

7. The leaning vehicle (1) according to any one of claims 1 to 6,
wherein the left foot placement portion (81), the right foot placement portion (82), and the restriction mechanism (9, 9A, 9B) are disposed below the link mechanism (5) in the up-down direction of the body frame (21).

8. The leaning vehicle (1) according to any one of claims 1 to 7,
wherein the steering member (61) includes a grip member (611) adapted to be gripped by the rider; and
wherein the grip member (611) is disposed ahead of a front end (811a) of the left foot placement face (811) and a front end (821a) of the right foot placement face (821) in a front-rear direction of the body frame (21).

## Patentansprüche

1. Ein Neigungsfahrzeug (1), das folgende Merkmale aufweist:
einen Karosserierahmen (21);
ein linkes Vorderrad (31) und ein rechtes Vorderrad (32), die in einer Links-Rechts-Richtung des Karosserierahmens (21) Seite an Seite angeordnet sind;
einen Trägerabschnitt (211a) einer Mittel-Lenkachse, der eine Mittel-Lenkachse (SI) definiert, die sich in einer Oben-Unten-Richtung des Karosserierahmens (21) erstreckt;
ein Lenkbauteil (31), das um die Mittel-Lenkachse (SI) relativ zu dem Karosserierahmen (21) drehbar ist;
einen Verknüpfungsmechanismus (5), der Folgendes aufweist:
einen linken Verknüpfungsabschnitt (5L), der einen Trägerabschnitt einer linken Lenkachse aufweist, der eine linke Lenkachse (SL) definiert, die sich in der Oben-Unten-Richtung des Karosserierahmens (21) erstreckt, auf der linken Seite des Trägerabschnitts (211a) der Mittel-Lenkachse in der Links-Rechts-Richtung des Karosserierahmens (21); und
einen rechten Verknüpfungsabschnitt (5R), der einen Trägerabschnitt einer rechten Lenkachse umfasst, der eine rechte Lenkachse (SR) definiert, die sich in der Oben-Unten-Richtung des Karosserierahmens (21) erstreckt, auf der rechten Seite des Trägerabschnitts (211a) der Mittel-Lenkachse in der Links-Rechts-Richtung des Karosserierahmens (21),
wobei der Verknüpfungsmechanismus (5) dazu ausgebildet ist, Positionen des linken Vorderrads (31) und des rechten Vorderrads (32) relativ zu dem Karosserierahmen (21) zu verändern, um zu bewirken, dass sich der Karosserierahmen (21) auf die linke Seite neigt, wenn das Neigungsfahrzeug (1) nach links gelenkt wird, und zu bewirken, dass sich der Karosserierahmen (21) auf die rechte Seite des Neigungsfahrzeugs (1) neigt, wenn das Neigungsfahrzeug (1) nach rechts gelenkt wird,
einen linken Aufhängeabschnitt (62), der mit dem Trägerabschnitt der linken Lenkachse verbunden ist, um so um die linke Lenkachse (SL) drehbar zu sein, und der das linke Vorderrad (31) trägt;
einen rechten Aufhängeabschnitt (63), der mit dem Trägerabschnitt der rechten Lenkachse verbunden ist, um so um die rechte Lenkachse (SR) drehbar zu sein, und der das rechte Vorderrad (32) trägt;
einen Lenkkraftübertragungsmechanismus (7), der dazu ausgebildet ist, zu bewirken, dass sich der linke Aufhängeabschnitt (62) und der rechte Aufhängeabschnitt (63) um die linke Lenkachse (SL) bzw. die rechte Lenkachse (SR) in einer gleichen Richtung wie eine Richtung drehen, in der das Lenkbauteil (61) gedreht wird;
einen Lastübertragungsmechanismus (8), der Folgendes aufweist:
einen linken Fußplatzierungsabschnitt (81) mit einer linken Fußplatzierungsfläche (811), auf der ein linker Fuß eines stehenden Fahrers platziert wird, wobei ein Winkel der linken Fußplatzierungsfläche (811) relativ zu dem Karosserierahmen (21) unverändert ist; und
einen rechten Fußplatzierungsabschnitt (82) mit einer rechten Fußplatzierungsfläche (821), auf der ein rechter Fuß des stehenden Fahrers platziert wird, wobei ein Winkel der rechten Fußplatzierungsfläche (821) relativ zu dem Karosserierahmen (21) unverändert ist;
wobei der Lastübertragungsmechanismus (8) dazu ausgebildet ist, eine Last durch die linke Fußplatzierungsfläche (811) auf einen des linken Verknüpfungsabschnitts (5L) und des rechten Verknüpfungsabschnitts (5R) zu übertragen und eine Last durch die rechte Fußplatzierungsfläche (821) auf den anderen des linken Verknüpfungsabschnitts (5L) und des rechten Verknüpfungsabschnitts (5R) zu übertragen;
einen Begrenzungsmechanismus (9, 9A, 9B), der dazu ausgebildet ist, eine Verschiebung des linken Fußplatzierungsabschnitts (81) und des rechten Fußplatzierungsabschnitts (82) relativ zu dem Karosserierahmen (21) zu begrenzen; und
einen Verbindungsabschnitt (52, 911), der den linken Fußplatzierungsabschnitt (81) und den rechten Fußplatzierungsabschnitt (82) verbindet, wobei der Verbindungsabschnitt (52, 911) um eine Achse drehbar ist, die sich in einer Vorne-Hinten-Richtung erstreckt,
wobei ein Abschnitt des Begrenzungsmechanismus (9, 9A, 9B) in dem Verbindungsabschnitt (52, 911) vorgesehen ist, und
**dadurch gekennzeichnet, dass**
der Begrenzungsmechanismus (9, 9A, 9B) a) eine Vorrichtung (921), die dazu ausgebildet ist, eine Drehbewegung des Verbindungsabschnitts (52, 911) durch Ausüben einer Reibungskraft zu begrenzen, oder b) eine Vorrichtung (923a) aufweist, die dazu ausgebildet ist, eine Drehbewegung des Verbindungsabschnitts (911) durch Ineingriffnahme mit dem Verbindungsabschnitt (911) zu begrenzen.

2. Das Neigungsfahrzeug (1) gemäß Anspruch 1,
bei dem der Verbindungsabschnitt (52, 911) an einer Position angeordnet ist, die näher an der linken Fußplatzierungsfläche (811) und der rechten Fußplatzierungsfläche (821) liegt als der Verknüpfungsmechanismus (5).

3. Das Neigungsfahrzeug (1) gemäß einem der Ansprüche 1 oder 2,
bei dem der linke Fußplatzierungsabschnitt (81) an einem Abschnitt in dem linken Verknüpfungsabschnitt (5L) vorgesehen ist, an dem er relativ zu dem Karosserierahmen (21) gemäß einer Neigungsbewegung des Karosserierahmens (21) verschiebbar ist und relativ zu dem Karosserierahmen (21) gemäß einer Verschiebung des Lenkkraftübertragungsmechanismus (7) nicht verschiebbar ist; und
bei dem der rechte Fußplatzierungsabschnitt (82) an einem Abschnitt in dem rechten Verknüpfungsabschnitt (5R) vorgesehen ist, an dem er relativ zu dem Karosserierahmen (21) gemäß einer Neigungsbewegung des Karosserierahmens (21) verschiebbar ist und relativ zu dem Karosserierahmen (21) gemäß einer Verschiebung des Lenckraftübertragungsmechanismus (7) nicht verschiebbar ist.

4. Das Neigungsfahrzeug (1) gemäß Anspruch 3,
bei dem der linke Fußplatzierungsabschnitt (81) und der rechte Fußplatzierungsabschnitt (82) in der Oben-Unten-Richtung des Karosserierahmens (21) gemäß einer Neigungsbewegung des Karosserierahmens (21) verschoben sind.

5. Das Neigungsfahrzeug (1) gemäß einem der Ansprüche 1 bis 4,
bei dem der Verknüpfungsmechanismus (5) ein oberes Querbauteil (51), ein unteres Querbauteil (52), ein linkes Seitenbauteil (53) und ein rechtes Seitenbauteil (54) aufweist;
wobei das obere Querbauteil (51), das untere Querbauteil (52), das linke Seitenbauteil (53) und das rechte Seitenbauteil (54) miteinander derart verbunden sind, dass das obere Querbauteil (51) und das untere Querbauteil (52) in Haltungen gehalten werden, die parallel zueinander sind, und derart, dass das linke Seitenbauteil (53) und das rechte Seitenbauteil (54) in Haltungen gehalten werden, die parallel zueinander sind;
wobei der linke Verknüpfungsabschnitt (5L) das linke Seitenbauteil (53), einen linken Abschnitt des oberen Querbauteils (51) und einen linken Abschnitt des unteren Querbauteils (52) aufweist; und
wobei der rechte Verknüpfungsabschnitt (5R) das rechte Seitenbauteil (54), einen rechten Abschnitt des oberen Querbauteils (51) und einen rechten Abschnitt des unteren Querbauteils (52) aufweist.

6. Das Neigungsfahrzeug (1) gemäß Anspruch 5,
bei dem der linke Fußplatzierungsabschnitt (81) an dem linken Seitenbauteil (53) vorgesehen ist; und
bei dem der rechte Fußplatzierungsabschnitt (82) an dem rechten Seitenbauteil (54) vorgesehen ist.

7. Das Neigungsfahrzeug (1) gemäß einem der Ansprüche 1 bis 6,
bei dem der linke Fußplatzierungsabschnitt (81), der rechte Fußplatzierungsabschnitt (82) und der Begrenzungsmechanismus (9, 9A, 9B) in der Oben-Unten-Richtung des Karosserierahmens (21) unterhalb des Verknüpfungsmechanismus (5) angeordnet sind.

8. Das Neigungsfahrzeug (1) gemäß einem der Ansprüche 1 bis 7,
bei dem das Lenkbauteil (61) ein Griffbauteil (611) aufweist, das dazu angepasst ist, durch den Fahrer ergriffen zu werden; und
wobei das Griffbauteil (611) in einer Vorne-Hinten-Richtung des Karosserierahmens (21) vor einem Vorderende (811a) der linken Fußplatzierungsfläche (811) und einem Vorderende (821a) der rechten Fußplatzierungsfläche (821) angeordnet ist.

## Revendications

1. Véhicule à inclinaison (1), comprenant:
un châssis de carrosserie (21);
une roue avant gauche (31) et une roue avant droite (32) qui sont disposées côte à côte dans une direction gauche-droite du châssis de carrosserie (21);
une partie de support d'axe de direction intermédiaire (211a) définissant un axe de direction intermédiaire (SI) s'étendant dans une direction du haut vers le bas du châssis de carrosserie (21);
un élément de direction (61) qui peut tourner autour de l'axe de direction intermédiaire (SI) par rapport au châssis de carrosserie (21);
un mécanisme de liaison (5) comportant:
une partie de liaison gauche (5L) comportant une partie de support d'axe de direction gauche définissant un axe de direction gauche (SL) s'étendant dans la direction du haut vers le bas du châssis de carrosserie (21) à gauche de la partie de support d'axe de direction intermédiaire (211a) dans la direction gauche-droite du châssis de carrosserie (21); et
une partie de liaison droite (5R) comportant une partie de support d'axe de direction droit définissant un axe de direction droit (SR) s'étendant dans la direction du haut vers le bas du châssis de carrosserie (21) à droite de la partie de support d'axe de direction intermédiaire (211a) dans la direction gauche-droite du châssis de carrosserie (21),
le mécanisme de liaison (5) étant configuré pour modifier les positions de la roue avant gauche (31) et de la roue avant droite (32) par rapport au châssis de carrosserie (21) pour amener le châssis de carrosserie (21) à s'incliner à gauche lorsque le véhicule à inclinaison (1) est dirigé vers la gauche et pour amener le châssis de carrosserie (21) à s'incliner à droite du véhicule à inclinaison (1) lorsque le véhicule à inclinaison (1) est dirigé vers la droite,
une partie de suspension gauche (62) connectée à la partie de support d'axe de direction gauche de manière à pouvoir tourner autour de l'axe de direction gauche (SL), et supportant la roue avant gauche (31);
une partie de suspension droite (63) connectée à la partie de support d'axe de direction droit de manière à pouvoir tourner autour de l'axe de direction droit (SR), et supportant la roue avant droite (32);
un mécanisme de transmission de force de direction (7) configuré pour faire tourner la partie de suspension gauche (62) et la partie de suspension droite (63) respectivement autour de l'axe de direction gauche (SL) et autour de l'axe de direction droit (SR), dans la même direction que la direction dans laquelle est tourné l'élément de direction (61);
un mécanisme de transmission de charge (8) comportant:
une partie de pose de pied gauche (81) présentant une face de pose de pied gauche (811) sur laquelle est posé un pied gauche d'un pilote debout, où un angle de la face de pose de pied gauche (811) par rapport au châssis de carrosserie (21) est inchangé; et
une partie de pose de pied droit (82) présentant une face de pose de pied droit (821) sur laquelle est posé un pied droit du pilote debout, où un angle de la face de pose de pied droit (821) par rapport au châssis de carrosserie (21) est inchangé;
le mécanisme de transmission de charge (8) étant configuré pour transmettre la charge par l'intermédiaire de la face de pose de pied gauche (811) à l'une parmi la partie de liaison gauche (5L) et la partie de liaison droite (5R), et pour transmettre la charge par l'intermédiaire de la face de pose de pied droit (821) à l'autre parmi la partie de liaison gauche (5L) et la partie de liaison droite (5R);
un mécanisme de limitation (9, 9A, 9B) configuré pour limiter le déplacement de la partie de pose de pied gauche (81) et de la partie de pose de pied droit (82) par rapport au châssis de carrosserie (21); et
une partie de connexion (52, 911) connectant la partie de pose de pied gauche (81) et la partie de pose de pied droit (82), la partie de connexion (52, 911) pouvant tourner autour d'un axe s'étendant dans une direction avant-arrière,
dans lequel une partie du mécanisme de limitation (9, 9A, 9B) est prévue dans la partie de connexion (52, 911), et
**caractérisé par le fait que**
le mécanisme de limitation (9, 9A, 9B) comporte a) un dispositif (921) configuré pour limiter un mouvement de rotation de la partie de connexion (52, 911) en appliquant une force de frottement, ou b) un dispositif (923a) configuré pour limiter un mouvement de rotation de la partie de connexion (911) en venant en prise avec la partie de connexion (911).

2. Véhicule à inclinaison (1) selon la revendication 1,
dans lequel la partie de connexion (52, 911) est disposée à une position qui est plus proche de la face de pose de pied gauche (811) et de la face de pose de pied droit (821) que du mécanisme de liaison (5).

3. Véhicule à inclinaison (1) selon l'une quelconque des revendications 1 ou 2,
dans lequel la partie de pose de pied gauche (81) est prévue dans une portion dans la partie de liaison gauche (5L) où elle est déplaçable par rapport au châssis de carrosserie (21) selon un mouvement d'inclinaison du châssis de carrosserie (21) et où elle n'est pas déplaçable par rapport au châssis de carrosserie (21) selon le déplacement du mécanisme de transmission de force de direction (7); et
dans lequel la partie de pose de pied droit (82) est prévue dans une portion dans la partie de liaison droite (5R) où elle est déplaçable par rapport au châssis de carrosserie (21) selon un mouvement d'inclinaison du châssis de carrosserie (21) et où elle n'est pas déplaçable par rapport au châssis de carrosserie (21) selon le déplacement du mécanisme de transmission de la force de direction (7).

4. Véhicule à inclinaison (1) selon la revendication 3,
dans lequel la partie de pose de pied gauche (81) et la partie de pose de pied droit (82) sont déplacées dans la direction du haut vers le bas du châssis de carrosserie (21) selon un mouvement d'inclinaison du châssis de carrosserie (21).

5. Véhicule à inclinaison (1) selon l'une quelconque des revendications 1 à 4,
dans lequel le mécanisme de liaison (5) comporte un élément transversal supérieur (51), un élément transversal inférieur (52), un élément latéral gauche (53) et un élément latéral droit (54);
dans lequel l'élément transversal supérieur (51), l'élément transversal inférieur (52), l'élément latéral gauche (53) et l'élément latéral droit (54) sont connectés l'un à l'autre de sorte que l'élément transversal supérieur (51) et l'élément transversal inférieur (52) soient maintenus dans des postures qui sont parallèles l'une à l'autre, et de sorte que l'élément latéral gauche (53) et l'élément latéral droit (54) soient maintenus dans des postures qui sont parallèles l'une à l'autre;
dans lequel la partie de liaison gauche (5L) comporte l'élément latéral gauche (53), une partie gauche de l'élément transversal supérieur (51) et une partie gauche de l'élément transversal inférieur (52); et
dans lequel la partie de liaison droite (5R) comporte l'élément latéral droit (54), une partie droite de l'élément transversal supérieur (51) et une partie droite de l'élément transversal inférieur (52).

6. Véhicule à inclinaison (1) selon la revendication 5,
dans lequel la partie de pose de pied gauche (81) est prévue sur l'élément latéral gauche (53); et
dans lequel la partie de pose de pied droit (82) est prévue sur l'élément latéral droit (54).

7. Véhicule à inclinaison (1) selon l'une quelconque des revendications 1 à 6,
dans lequel la partie de pose de pied gauche (81), la partie de pose de pied droit (82) et le mécanisme de limitation (9, 9A, 9B) sont disposés au-dessous du mécanisme de liaison (5) dans la direction du haut vers le bas du châssis de carrosserie (21).

8. Véhicule à inclinaison (1) selon l'une quelconque des revendications 1 à 7,
dans lequel l'élément de direction (61) comporte un élément de préhension (611) adapté pour être saisi par le pilote; et
dans lequel l'élément de préhension (611) est disposé en avant d'une extrémité avant (811a) de la face de pose de pied gauche (811) et d'une extrémité avant (821a) de la face de pose de pied droit (821) dans une direction avant-arrière du châssis de carrosserie (21).
